# EUROPEAN PATENT APPLICATION

(11) **EP 4 701 173 A1**
(43) Date of publication of application: **25.02.2026**
(21) Application number: 24822278.8
(22) Date of filing: 29.02.2024
(51) Int. Cl.: H04M 7/12

(54) **METHOD AND APPARATUS FOR CALL CONNECTION**

(30) Priority: 16.06.2023 CN 202310726855
(71) Applicant: Honor Device Co., Ltd., Shenzhen, Guangdong 518040 (CN)
(72) Inventor: LI, Haibo, Shenzhen, Guangdong 518040 (CN)
(74) Representative: Isarpatent
(86) International application number: PCT/CN2024/079362
(87) International publication number: WO 2024/255320

(57) **Abstract**

A call connection method and apparatus are provided, and are applied to a process of establishing a call between a calling side and a called side in a scenario in which a called terminal subscribes to a caller ring back tone business. The method includes: In a process of signaling interaction between a calling terminal and the called terminal, after an action of tapping answering by a user of the called terminal, if the called terminal has not received first ACK signaling replied by a network side (for example, an S-CSCF), but receives second INVITE signaling, in this case, the called terminal assumes that the network side has sent the first ACK signaling, and replies to the network side with second 200 OK (INVITE) signaling after receiving the second INVITE signaling. In comparison with a manner of replying 491 signaling in this case, the method in embodiments of this application reduces a probability of no audio in a call, can increase a probability of successful calls, and helps improve user call experience.

## Description

This application claims priority to Chinese Patent Application No. 202310726855.1, filed with the China National Intellectual Property Administration on June 16, 2023 and entitled "CALL CONNECTION METHOD AND APPARATUS", which is incorporated herein by reference in its entirety.

### TECHNICAL FIELD

This application relates to the call field, and specifically, to a call connection method and apparatus.

### BACKGROUND

Currently, terminals generally support a caller ring back tone function. Usually, an operator enables the caller ring back tone function for a terminal user by default. Taking a called terminal as an example, after a caller ring back tone service is enabled on the called terminal, when a calling terminal calls the called terminal, during vibration on ring of the called terminal, a caller ring back tone platform in a telecommunication network plays an audio ring tone to the calling terminal as a waiting tone (a ring back tone).

In a process of establishing a call connection between the calling terminal and the called terminal, a message or signaling in a session initiation protocol (session initiation protocol, SIP) protocol may be used for communication. The SIP is an application layer control protocol proposed by the Internet Engineering Task Force (the internet engineering task force, IETF) for multimedia communication over IP networks.

Signaling interaction procedures involved in a call establishment process are different for a terminal on which a caller ring back tone function is enabled and a terminal on which the caller ring back tone function is not enabled. After the caller ring back tone function is enabled, many signaling procedures may be added during establishing the call connection between the called terminal and the calling terminal. In addition, some signaling may be lost during signaling forwarding, which results in a failure to establish a call between the calling terminal and the called terminal. In this case, compared with the terminal on which the caller ring back tone function is not enabled, the terminal on which the caller ring back tone function is enabled is more prone to a problem of no audio or one-way audio during a call, which affects user call experience.

### SUMMARY

In view of this, this application provides a call connection method and apparatus, a computer-readable storage medium, and a computer program product, which can reduce a probability of no audio during a call, and improve user call experience.

According to a first aspect, a call connection method is provided, and the method is applied to a first terminal. The method includes:
when a second terminal initiates a first call to the first terminal, receiving first INVITE signaling from the second terminal;
sending first 200 OK signaling in response to the first INVITE signaling after an answer action of a user is detected;
receiving second INVITE signaling based on the first call, where the second INVITE signaling includes a first identifier, the first INVITE signaling does not include the first identifier, and after sending the first 200 OK signaling, the first terminal does not receive first ACK signaling before receiving the second INVITE signaling; and
sending second 200 OK signaling in response to the second INVITE signaling.

The foregoing technical solution is performed by the first terminal or a chip in the first terminal. Based on the foregoing solution, after an answer action of a user of the first terminal is received, for a case in which the first terminal does not receive the first ACK signaling replied by a network side but receives the second INVITE signaling, in comparison with a manner in which the first terminal replies to the network side with 491 signaling (in this manner, subsequent signaling interaction steps cannot be performed, and consequently a call between the first terminal and the second terminal is with no audio), in this embodiment of this application, it is assumed, in this case, that the first ACK signaling has been received, and second 200 OK (INVITE) signaling is replied to the network side after the second INVITE signaling is received, so that the subsequent signaling interaction steps can be normally performed, and voice data between the first terminal and the second terminal can be transmitted, thereby helping increase a probability of successful calls, and improve user call experience.

For example, the first terminal is a called terminal, and the second terminal is a calling terminal.

In some possible implementations, after the second INVITE signaling is received, the method further includes:
determining whether the first ACK signaling is received; and
sending the second 200 OK signaling when the first ACK signaling is not received.

In other words, after receiving the second INVITE signaling, the first terminal may determine whether the first ACK signaling is received. The second 200 OK signaling is sent to the network side even if the first ACK signaling is not received.

Optionally, preset duration may be set at a first terminal side to constrain time of waiting for the second INVITE signaling by the first terminal, to avoid that the first terminal keeps waiting for the second INVITE signaling.

Optionally, the foregoing preset duration may be implemented by introducing a first timer.

In some possible implementations, the method further includes:
determining whether the first timer expires; and
the sending second 200 OK signaling includes:
   sending the second 200 OK signaling when the first ACK signaling is not received and the first timer does not expire, where that the first timer does not expire means that timing duration of the first timer is less than or equal to preset duration, and the timing duration of the first timer is duration between a moment at which the answer action of the user is detected and a current moment, or duration between a moment at which the first 200 OK signaling is sent and the current moment.

Optionally, after the first terminal receives the answer action of the user or sends the first 200 OK (INVITE) signaling, a first timer starts timing (or the first timer starts).

In some possible implementations, the method further includes: sending the 491 signaling when the first ACK signaling is not received and the first timer expires. In other words, if the second INVITE signaling is received when the first timer expires, the first terminal replies with the 491 signaling.

In some possible implementations, the method further includes:
receiving second ACK signaling from the second terminal; and
after receiving the second ACK signaling, receiving voice data from the second terminal, or sending voice data to the second terminal.

After the first terminal replies to the network side with the second 200 OK (INVITE) signaling, subsequent steps are normally performed. For example, the first terminal may receive the second ACK signaling of the second terminal, and then perform voice data transmission with the second terminal.

It should be understood that the signaling shown above is some signaling between the first terminal and the second terminal, and this embodiment of this application is not limited thereto.

In some possible implementations, the method further includes:
after receiving the first INVITE signaling, sending 180 Ringing signaling to the second terminal.

In some possible implementations, before the 180 Ringing signaling is sent, the method further includes:
receiving UPDATE signaling from the second terminal; and
sending third 200 OK signaling in response to the UPDATE signaling. The third 200 OK signaling is 200 OK (UPDATE) signaling.

For example, the 200 OK (UPDATE) signaling may indicate that the UPDATE signaling has been received.

Therefore, the first terminal may learn, by using the UPDATE signaling, that the second terminal has established a voice bearer, and reply to the second terminal with the 200 OK (UPDATE) signaling.

In some possible implementations, the first 200 OK signaling is sent after a caller ring back tone starts to play; and the second INVITE signaling is received after the caller ring back tone stops playing.

According to a second aspect, a call connection method is provided, and the method is applied to a first network side device. The first network side device may be a first core network device (for example, a first S-CSCF), or may be a first access network device. The method includes:
sending first INVITE signaling from a second terminal to a first terminal;
receiving first 200 OK signaling from the first terminal, where the first 200 OK signaling is sent by the first terminal in response to the first INVITE signaling after detecting an answer action of a user;
when first ACK signaling is not sent to the first terminal, sending second INVITE signaling to the first terminal, where the second INVITE signaling includes a first identifier, and the first INVITE signaling does not include the first identifier; and
receiving second 200 OK signaling from the first terminal, where the second 200 OK signaling is sent by the first terminal in response to the second INVITE signaling.

The foregoing technical solution is performed by the first network side device or a chip in the first network side device. Based on the foregoing solution, when the first network side device does not send the first ACK signaling to the first terminal or fails to send the first ACK signaling, the first network side device sends the second INVITE signaling to the first terminal, and receives the second 200 OK signaling from the first terminal, so that subsequent signaling interaction steps can be normally performed, and voice data between the first terminal and the second terminal can be forwarded, thereby helping increase a probability of successful calls, and improve user call experience.

According to a third aspect, a call connection method is provided, and the method is applied to a caller ring back tone server. The method includes:
receiving first INVITE signaling from a second terminal;
reserving caller ring back tone resources, and sending the first INVITE signaling to a first terminal;
after receiving 180 Ringing signaling from the first terminal, sending, to the second terminal, the 180 Ringing signaling carrying a caller ring back tone indication;
after receiving PRACK signaling of the second terminal, starting to play a caller ring back tone;
receiving first 200 OK signaling from the first terminal, where the first 200 OK signaling responds to the first INVITE signaling;
stopping playing the caller ring back tone and sending first ACK signaling (which may not be successfully sent);
sending second INVITE signaling; and
receiving second 200 OK signaling from the first terminal, where the second 200 OK signaling responds to the second INVITE signaling.

The foregoing technical solution is performed by the caller ring back tone server or a chip in the caller ring back tone server. Based on the foregoing solution, when the caller ring back tone server does not successfully send the first ACK signaling or fails to send the first ACK signaling, the caller ring back tone server sends the second INVITE signaling, and receives the second 200 OK signaling from the first terminal, so that subsequent signaling interaction steps can be normally performed, and voice data between the first terminal and the second terminal can be forwarded, thereby helping increase a probability of successful calls, and improve user call experience.

According to a fourth aspect, a call connection method is provided, and the method is applied to a second terminal. The method includes:
sending first INVITE signaling to a first terminal when initiating a first call to the first terminal;
receiving first 200 OK signaling from the first terminal, where the first 200 OK signaling responds to the first INVITE signaling; and
sending second ACK signaling to the first terminal.

The foregoing technical solution is performed by the second terminal or a chip in the second terminal. Based on the foregoing solution, the second terminal sends the first INVITE signaling to the first terminal when initiating a call, and replies to the first terminal with the second ACK signaling after receiving the first 200 OK signaling from the first terminal, so that subsequent signaling interaction steps can be normally performed, and voice data between the first terminal and the second terminal can be transmitted, thereby helping increase a probability of successful calls, and improve user call experience.

It may be understood that the signaling involved is some signaling between the first terminal and the second terminal, and this embodiment of this application is not limited thereto.

Optionally, after the sending second ACK signaling to the first terminal, the method further includes:
sending voice data to the first terminal, or receiving voice data from the first terminal.

Optionally, the method further includes:
sending UPDATE signaling to the first terminal;
receiving 200 OK (UPDATE) signaling from the first terminal; and
receiving 180 Ringing signaling from the first terminal, where the 180 Ringing signaling includes a caller ring back tone indication.

Optionally, when a caller ring back tone server starts to play a caller ring back tone, the second terminal starts to play the caller ring back tone. In this case, a user of the second terminal can hear the played caller ring back tone.

When the caller ring back tone server stops playing the caller ring back tone, the second terminal stops playing the caller ring back tone. In this case, the user of the second terminal cannot hear the played caller ring back tone.

According to a fifth aspect, an electronic device is provided, including a unit configured to perform the method in any implementation of the first aspect. The electronic device may be a first terminal or a chip in the first terminal. The electronic device includes an input unit, a display unit, and a processing unit.

When the electronic device is the first terminal, the processing unit may be a processor, the input unit may be a communication interface, and the display unit may be a graphics processing module and a screen. The terminal may further include a memory. The memory is configured to store computer program code. When the processor executes the computer program code stored in the memory, the terminal is enabled to perform the method in any implementation of the first aspect.

When the electronic device is the chip in the first terminal, the processing unit may be a logic processing unit inside the chip, the input unit may be an input interface, a pin, a circuit, or the like, and the display unit may be a graphics processing unit inside the chip. The chip may further include a memory, and the memory may be a memory (for example, a register or a cache) in the chip, or a memory (for example, a read-only memory or a random access memory) located outside the chip. The memory is configured to store computer program code. When the processor executes the computer program code stored in the memory, the chip is enabled to perform the method in any implementation of the first aspect.

According to a sixth aspect, a computer-readable storage medium is provided. The computer-readable storage medium stores computer program code. When the computer program code is run by a call connection apparatus, the apparatus is enabled to perform the method in any implementation of the first aspect.

According to a seventh aspect, a computer program product is provided. The computer program product includes computer program code, and when the computer program code is run by a call connection apparatus, the apparatus is enabled to perform any method in the first aspect.

According to an eighth aspect, an embodiment of this application provides a chip system. The chip system includes one or more processors, configured to invoke, from a memory, instructions stored in the memory and run the instructions, to enable the method in any one of the foregoing aspects or the possible implementations of the aspects to be performed. The chip system may include a chip, or may include a chip and another discrete device.

The chip system may include an input circuit or interface configured to send information or data, and an output circuit or interface configured to receive information or data.

According to a ninth aspect, a communication system is provided, including one or more of the foregoing first terminal, the second terminal, the caller ring back tone server (for example, a CAT-AS), the first core network device (for example, the first S-CSCF), and a second core network device (for example, a second S-CSCF). Optionally, the communication system may further include another device (for example, a calling access network device or a called access network device) that communicates with the foregoing device.

### BRIEF DESCRIPTION OF DRAWINGS

FIG. 1 is an example diagram of a scenario of a communication system to which an embodiment of this application is applied;
FIG. 2A and FIG. 2B are an example diagram of signaling interaction of a voice call when a caller ring back tone service is enabled on a first terminal;
FIG. 3A and FIG. 3B are a diagram of a signaling interaction procedure when a first terminal does not receive first ACK signaling;
FIG. 4A and FIG. 4B are an example diagram of signaling interaction when a first terminal does not receive first ACK signaling according to an embodiment of this application;
FIG. 5 is an example diagram of a method procedure performed by a first terminal according to an embodiment of this application;
FIG. 6 is an example block diagram of a call connection apparatus according to an embodiment of this application;
FIG. 7 is a schematic diagram of a structure of a call connection apparatus according to an embodiment of this application;
FIG. 8 is an example diagram of a structure of an electronic device according to an embodiment of this application; and
FIG. 9 is a schematic block diagram of a software structure of an electronic device according to an embodiment of this application.

### DESCRIPTION OF EMBODIMENTS

The following describes the technical solutions in the embodiments of this application with reference to the accompanying drawings.

In embodiments of this application, unless otherwise specified, "a plurality of" may mean two or more.

The technical solutions in the embodiments of this application may be applied to various communication systems, for example, a long term evolution (long term evolution, LTE) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future mobile communication system, vehicle-to-X (vehicle-to-X, V2X), where the V2X may include vehicle to network (vehicle to network, V2N), vehicle to-vehicle (vehicle to-vehicle, V2V), vehicle to infrastructure (vehicle to infrastructure, V2I), vehicle to pedestrian (vehicle to pedestrian, V2P), and the like, long term evolution-vehicle (long term evolution-vehicle, LTE-V), internet of vehicles, machine type communication (machine type communication, MTC), internet of things (internet of things, IoT), long term evolution-machine (long term evolution-machine, LTE-M), machine to machine (machine to machine, M2M).

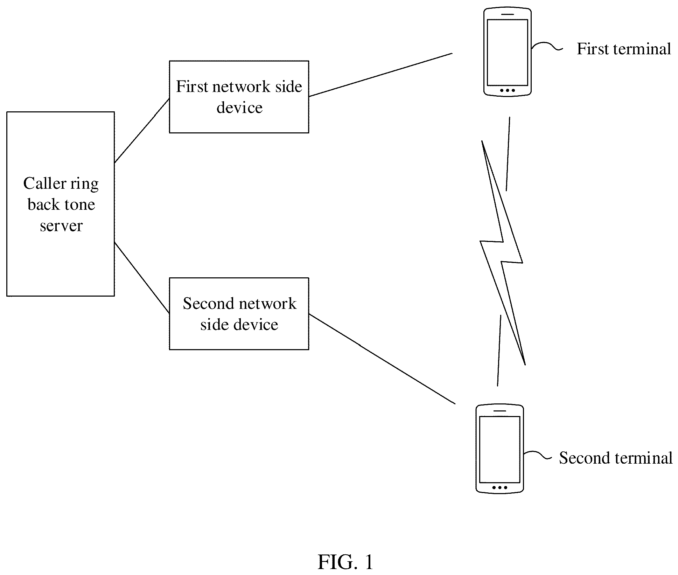

FIG. 1 is an example diagram of a scenario of a communication system to which an embodiment of this application is applied. As shown in FIG. 1, the communication system includes a second terminal, a first terminal, a first network side device, a second network side device, and a caller ring back tone server. A call connection may be established between the second terminal and the first terminal by using a radio access network.

The caller ring back tone server provides resources or information related to a caller ring back tone service. A terminal may customize a caller ring back tone service by using the caller ring back tone server, to play a caller ring back tone customized by a user when the terminal is called, so that a user at a calling side can listen to a caller ring back tone in a process of waiting for a call connection. For example, the caller ring back tone server may include a customized alerting tones (customized alerting tones, CAT) application server (application server, AS).

Optionally, the first terminal may customize a caller ring back tone service. For example, if a user of the first terminal customizes a caller ring back tone service, when the second terminal calls the first terminal, in a process of waiting for a connection, the caller ring back tone server may search a database for a caller ring back tone customized by a number corresponding to the first terminal for playing.

For example, the first terminal is a called terminal, and the second terminal is a calling terminal.

It should be understood that, FIG. 1 is merely a schematic diagram of an architecture of a communication system. The communication system may further include other network devices, for example, may further include a wireless relay device and a wireless backhaul device, which are not shown in FIG. 1. A quantity of core network devices, a quantity of radio access network devices, and a quantity of terminals included in the mobile communication system are not limited in this embodiment of this application.

Optionally, a network side device (either the first network side device or the second network side device) shown in FIG. 1 may include a core network device and a radio access network device.

At either a calling side or a called side, the terminal may be connected to an access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or some functions of the core network device and some functions of the radio access network device may be integrated into one physical device. A terminal device may be in a fixed position or may be movable.

It may be understood that the first network side device and the second network side device shown in FIG. 1 are merely example descriptions, and this embodiment of this application is not limited thereto. For example, the first network side device includes a first core network device and a first access network device), and the second network device includes a second core network device and a second access network device.

The terminal in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal may be a device that provides voice and/or data connectivity to a user, for example, a handheld device or an onboard device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal equipped with a cloud game, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, a terminal device in a 5G network, a terminal device in a future evolved public land mobile network (public land mobile network, PLMN), and the like. This is not limited in the embodiments of this application.

As an example rather than a limitation, in the embodiments of this application, the terminal may alternatively be a wearable device. The wearable device may also be referred to as a wearable smart device, and is a generic term for wearable devices such as glasses, gloves, watches, clothing, and shoes that are intelligently designed and developed from daily wears by using wearable technologies. The wearable device is a portable device that is worn directly on a body or integrated into clothing or an accessory of a user. The wearable device is not merely a hardware device, but implements powerful functions through software support, data interaction, and cloud interaction. In a broad sense, the wearable smart device includes a full-featured and large-size device that can implement all or some of functions without relying on a smartphone, for example a smartwatch or smart glasses, and a device that focuses only on a specific type of application function and needs to be used together with another device such as a smartphone, for example, various types of smart bands and smart jewelry that monitor physical signs.

In addition, in the embodiments of this application, the terminal may alternatively be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things. A specific technology and a specific device form that are used by the terminal are not limited in the embodiments of this application.

The network referred to in the embodiments of this application is a general name of a core network device and an access network device that are responsible for processing voice services, and includes an internet protocol (internet protocol, IP) multimedia subsystem (IP multimedia subsystem, IMS) network or another network. The IMS network includes an IMS domain core network and an evolved packet core (Evolved Packet Core, EPC) network. The IMS domain core network include a serving-call session control function (serving-call session control function, S-CSCF), an interrogating-call session control function (interrogating-call session control function, I-CSCF), a proxy-call session control function (proxy-call session control function, P-CSCF), a session border controller (session border controller, SBC), and several dedicated servers, such as a multimedia telephony application server (multimedia telephony application server, MMTel AS). The I-CSCF may be disposed together with the S-CSCF, which may be referred to as "I/S-CSCF" for short. The SBC may be disposed together with the P-CSCF, which may be referred to as "SBC/P-CSCF" for short. The EPC may include a packet data network gateway (packet data network gateway, PGW), a serving gateway (serving gateway, SGW), and a mobile management entity (mobile management entity, MME). The PGW may be disposed together with the SGW, which may be referred to as "SGW/PGW" for short.

The foregoing network elements are corresponding network elements in the IMS network in the conventional technology, and are not described in detail but only briefly herein. For example, the S-CSCF may be used for user registration, authentication control, session routing, and service trigger control, and maintain session status information. The I-CSCF may be used for assignment and query of an S-CSCF registered by a user. The P-CSCF may be used for proxy of signaling and a message. The SBC can provide secure access and media processing. The MMTel AS provides basic and supplementary services for a multimedia telephone. The MME is a core device of the EPC network. The SGW may be used to connect an IMS core network to a wireless network, and the PGW may be used to connect the IMS core network to an IP network.

The radio access network (radio access network, RAN) device is an access device that is accessed by the terminal in a wireless manner and that is in the mobile communication system, and may be a base station NodeB, an evolved NodeB (evolved NodeB, eNB), a next generation NodeB (next generation NodeB, gNB) in a 5G mobile communication system, a transmission point, a base station in a future mobile communication system, an access node in a Wi-Fi system, or one or more antenna panel of a base station in the 5G system, or may be a network node that constitutes a gNB or a transmission point, for example, a baseband unit (baseband unit, BBU) or a distributed unit (distributed unit, DU). A specific technology and a specific device form that are used by the radio access network device are not limited in the embodiments of this application. In some deployments, the gNB may include a central unit (central unit, CU) and a DU, and the CU and the DU separately implement some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The gNB may further include an active antenna unit (active antenna unit, AAU). The AAU implements some physical layer processing functions and related functions of radio frequency processing and an active antenna. Information of the RRC layer eventually becomes information of the PHY layer, or is obtained by converting information of the PHY layer. Therefore, in this architecture, higher layer signaling such as RRC layer signaling may be considered as being sent by the DU or sent by the DU and the AAU. It may be understood that the network device may be a device including one or more of a CU node, a DU node, and an AAU node. In addition, the CU may be used as a network device in an access network, or may be used as a network device in a core network (core network, CN). This is not limited in this application.

The radio access network device and the terminal may be deployed on land, including indoor or outdoor and handheld or onboard, or may be deployed on water, or may be deployed on an aircraft, a balloon, and a satellite in the air. Application scenarios of the radio access network device and the terminal are not limited in the embodiments of this application.

Communication may be performed between the radio access network device and the terminal and between terminals through a licensed spectrum (licensed spectrum), an unlicensed spectrum (unlicensed spectrum), or both a licensed spectrum and an unlicensed spectrum. Communication may be performed between the radio access network device and the terminal and between terminals by using a spectrum below 6 gigahertz (gigahertz, GHz), or a spectrum above 6G, or both a spectrum below 6G and a spectrum above 6G. A spectrum resource used between the radio access network device and the terminal is not limited in the embodiments of this application.

In the embodiments of this application, the terminal or the network device includes a hardware layer, an operating system layer that runs at the hardware layer, and an application layer that runs at the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as Browser, Contacts, word processing software, and instant messaging software. In addition, a specific structure of an execution body of the method provided in the embodiments of this application is not particularly limited in the embodiments of this application, provided that a program that records code of the method provided in the embodiments of this application can be run to perform communication according to the method provided in the embodiments of this application. For example, the execution body of the method provided in the embodiments of this application may be the terminal device or the network device, or a functional module that is in the terminal device or the network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key driver). In addition, various storage media described in this specification may represent one or more devices and/or other machine-readable media that are configured to store information. The term "machine-readable media" may include but are not limited to a radio channel and various other media that can store, include, and/or carry instructions and/or data.

It should be noted that explanations of signaling and terminology in this application may also be referred to explanations in a 3rd generation partnership project (3rd generation partnership project, 3GPP) standard protocol, for example, 24.229, RFC3261, and RFC3262. Capital and lower-case letters and spaces in signaling in this application are merely examples.

For example, an interaction procedure in the embodiments of this application may be applied to a session initiation protocol (session initiation protocol, SIP). The SIP is used for controlling initiation, modification, and termination of a signaling protocol of an interactive multimedia session.

Some messages in the SIP protocol are briefly described below.

A session invite message (INVITE) is used to initiate a session request. For example, the session invite message may be initiated by the calling terminal.

An update message (UPDATE) is used to initiate an update request or update a session parameter. The update message is usually used for media update. For example, the update message may be initiated by the calling terminal.

A provisional response message refers to a provisional response acknowledgement (provisional response acknowledgement, PRACK), and is used to return an acknowledgement to a provisional reliability response and confirm that a 1XX provisional response has been received. For example, the PRACK message is usually used to confirm a 183 message when a session is established, and provide session description protocol (session description protocol, SDP) second time, to negotiate a media resource.

An ACK message indicates that a final response to an INVITE request has been received. After receiving a 200 OK final response with which a called party replies in a session, a calling party sends the ACK message to the called party to confirm that the calling party has received the final response, to complete a three-way handshake including INVITE, 200 OK, and ACK. The ACK message is used only with the INVITE message.

A BYE request is used to end a current session. When the BYE request is received, a session in which a current dialog (Dialog) is located is terminated. The BYE request may be sent only in an set up dialog (set up through an INVITE request), a calling party of a session may send the BYE request in an early dialog (Early Dialog) and a confirmed dialog (Confirmed Dialog) to terminate the session, and a called party may send the BYE request only in the confirmed dialog (Confirmed Dialog) to terminate the session.

A SIP protocol response message is used to respond to a request message and indicate a success or failure state of a call. Different types of response messages are distinguished by status codes. A status code usually includes a three-digit integer. The first digit of the status code is used to define a response type, and the other two digits are used to further describe the response in more detail.

SIP protocol response messages are classified as follows:
1xx: is an information response (a call progress response), indicating that a request message has been received and is being processed.

For example, a 100 Trying message is a provisional response message, indicating that an INVITE message has been received and is being processed. For another example, a 180 Ringing message is a vibration on ring message, indicating that an INVITE message has reached a called side, and the called side has started to vibrate on ring.

2xx: is a success response, indicating that a request has been successfully accepted or processed. For example, a 200 OK (INVITE) message is used to indicate that an INVITE request has been successfully accepted or processed.

3xx: is a redirection response, indicating that a further action needs to be taken to complete a request.

4xx: is a client error, indicating that a request message includes a syntax error or a SIP server cannot complete processing of the request message, for example, a 491 (Request Pending) message.

It should be understood that the foregoing messages in the SIP protocol are merely examples for description, and the embodiments of this application are not limited thereto.

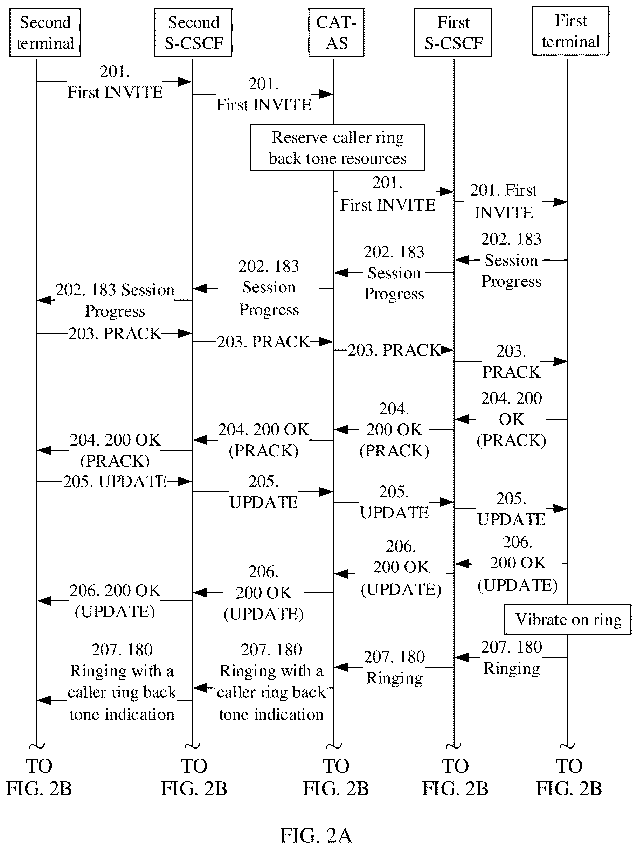

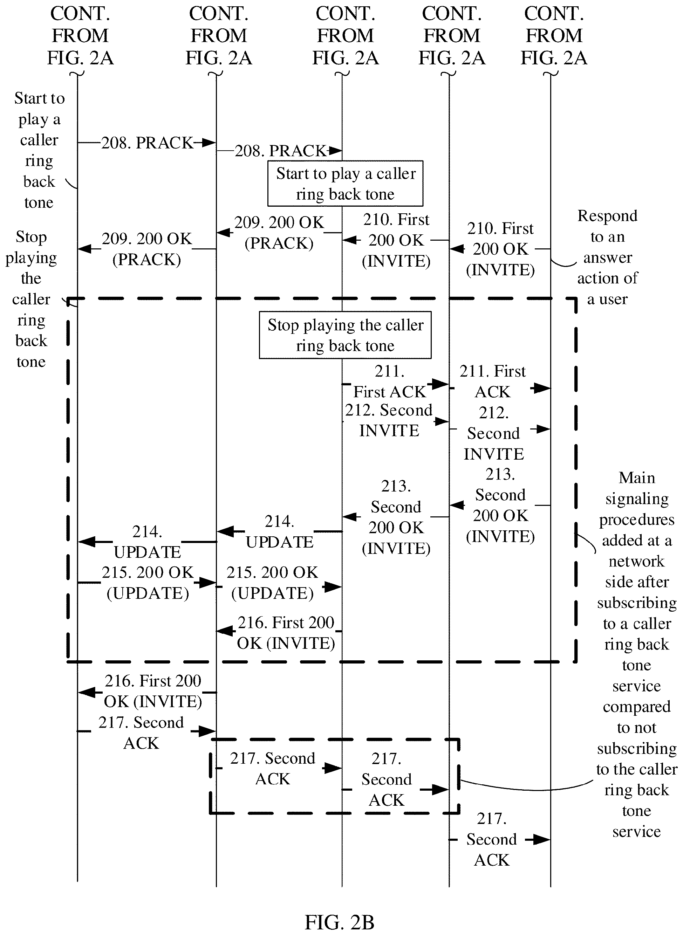

FIG. 2A and FIG. 2B are an example diagram of signaling interaction of a voice call when a caller ring back tone service is enabled on a first terminal. It should be understood that various messages involved in the steps shown in FIG. 2A and FIG. 2B may be existing messages in the SIP protocol, or may be newly defined messages. This is not specifically limited. It should be further understood that the procedure shown in FIG. 2A and FIG. 2B may be applied to the scenario shown in FIG. 1. For example, an S-CSCF shown in FIG. 2A may be an example of the core network device in FIG. 1; a CAT-AS shown in FIG. 2A may be an example of the caller ring back tone server in FIG. 1; a second terminal in FIG. 2A may be the second terminal in FIG. 1; and a first terminal in FIG. 2A may be the first terminal in FIG. 1.

Optionally, in some embodiments, in a process in which the second terminal makes a call to the first terminal, a user of the second terminal may hear a caller ring back tone of the first terminal. After a user of the first terminal taps to answer, the caller ring back tone stops playing. A session is normally established between the first terminal and the second terminal, and the user of the second terminal can hear a sound from the first terminal.

Step 201: The second terminal sends first INVITE signaling to the first terminal.

It should be noted that, with reference to the scenario shown in FIG. 1, when the user of the second terminal dials a SIM card number of the user of the first terminal, the second terminal initiates a first call to the first terminal.

For example, a SIM card installed in the first terminal includes a first SIM card, and a SIM card installed in the second terminal includes a second SIM card. When the user of the second terminal dials the number of the first SIM card of the first terminal based on the second SIM card, the second terminal initiates the first call to the first terminal.

For example, when the user of the second terminal dials the number of the user of the first terminal, the second terminal sends the first INVITE signaling to the first terminal.

Optionally, as shown in FIG. 2A, step 201 includes: The second terminal sends the first INVITE signaling to a second S-CSCF; after receiving the first INVITE signaling, the second S-CSCF sends the first INVITE signaling received from the second terminal to the CAT-AS; after receiving the first INVITE signaling, the CAT-AS may reserve caller ring back tone resources (CAT resources), and send the received first INVITE signaling to a first S-CSCF; and the first S-CSCF sends the first INVITE signaling to the first terminal.

Reserving the caller ring back tone resources can be understood as preparations for subsequent playing a caller ring back tone, for example, reserving memory space to create an instance.

It may be understood that signaling interaction between the terminal and the S-CSCF needs to pass through an access network device. For brevity, the access network device is not shown in FIG. 2A and FIG. 2B. However, this does not constitute a limitation on the embodiments of this application.

For example, in step 201 in FIG. 2A, when the second terminal sends the first INVITE signaling to the second S-CSCF, the first INVITE signaling needs to be forwarded by using a second access network device. To be specific, the second terminal sends the first INVITE signaling to the second access network device. After receiving the first INVITE signaling sent by the second terminal, the second access network device sends the first INVITE signaling sent by the second terminal to the second S-CSCF.

For another example, in step 201 in FIG. 2A, when the first S-CSCF sends the first INVITE signaling to the first terminal, the first INVITE signaling needs to be forwarded by using a first access network device. To be specific, the first S-CSCF sends the first INVITE signaling to the first access network device. After receiving the first INVITE signaling sent by the first S-CSCF, the first access network device sends the first INVITE signaling to the first terminal.

It should be understood that only an example in which the second terminal sends the first INVITE signaling to the first terminal in step 201 is used for description herein. Other signaling (for example, 183 Session Progress signaling in the following step 202, PRACK signaling in step 203, 200 OK (PRACK) signaling in step 204, UPDATE signaling in step 205, and 200 OK (UPDATE) signaling in step 206) exchanged between the second terminal and the first terminal in this application may also be transmitted in a manner of step 201, which is not described in detail later.

It should be further understood that if a caller ring back tone service is not enabled on the first terminal, a procedure of the CAT-AS is not involved in FIG. 2A and FIG. 2B. For example, forwarding of the first INVITE signaling does not pass through the CAT-AS.

The first INVITE signaling may indicate that the second terminal initiates a call (for example, the first call) to the first terminal.

It may be understood that an occasion at which the second terminal sends the first INVITE signaling is not specifically limited in this embodiment of this application. For example, the second terminal may send the first INVITE signaling to the first terminal when a calling user initiates a voice call.

Optionally, the first INVITE signaling includes one or more of the following items: a sequence number (sequence, Cseq), a Message ID, Response Code, and a Call ID.

For example, Cseq in the first INVITE signaling is: Cseq: 1 INVITE signaling, indicating a sequence number of the first INVITE signaling is 1.

In step 201, a network element node that is passed through when the second terminal sends the first INVITE signaling to the first terminal is described. Generally, when receiving INVITE signaling, a network element node replies, with 100 Trying signaling, to a previous network element node of the network element node (or to a network element node that sends the INVITE signaling to the network element node), to notify the previous network element node that the INVITE signaling has been received. For example, after receiving the first INVITE signaling sent by the second terminal, the S-CSCF immediately replies to the second terminal with 100 Trying signaling. After receiving the first INVITE signaling sent by the S-CSCF, the CAT-AS immediately replies to the S-CSCF with 100 Trying signaling.

Step 202: The first terminal sends 183 Session Progress signaling to the second terminal.

The 183 session progress (Session Progress) signaling may refer to session progress information, and the session progress information includes information about a first handshake in a process of three handshakes (including the first handshake, a second handshake, and a third handshake) between the first terminal and the second terminal. The 183 Session Progress signaling may indicate that the first terminal performs voice coding negotiation with the second terminal.

For example, the 183 Session Progress signaling may be used to establish an early media service, for example, a user-customized caller ring back tone or ring tone.

Optionally, after the first terminal sends the 100 Trying signaling to the second terminal, the first terminal sends the 183 Session Progress signaling to the first S-CSCF. After receiving the 183 Session Progress signaling, the first S-CSCF sends the 183 Session Progress signaling received from the first terminal to the CAT-AS. After receiving the 183 Session Progress signaling, the CAT-AS may send the received 183 Session Progress signaling to the second S-CSCF. The second S-CSCF sends the 183 Session Progress signaling to the second terminal.

Optionally, the 183 Session Progress signaling includes one or more of the following items: a sequence number (sequence, Cseq), a Message ID, Response Code, and a Call ID.

For example, Cseq in the 183 Session Progress signaling is: Cseq: 1 INVITE signaling, indicating that the 183 Session Progress signaling is corresponding to INVITE signaling whose sequence number is 1, namely, the first INVITE signaling in step 201.

It should be noted that in step 201, the Call ID in the first INVITE signaling is different from the Call ID in the 183 Session Progress signaling in step 202. A reason is that a session has not been established when the second terminal initiates the first INVITE signaling in step 201. To be specific, in step 201, from a perspective of the first terminal, the Call ID in the first INVITE signaling received by the first terminal is a value. In step 202, when the first terminal sends the 183 Session Progress signaling to the second terminal, it indicates that processing is performed. In this case, the Call ID included in the 183 Session Progress signaling is another value (different from the Call ID in the first INVITE signaling). In a signaling interaction process after step 202, a value of a Call ID included in signaling is consistent with the value of the Call ID included in 183 Session Progress signaling. In other words, the Call ID in the first INVITE signaling is not a valid Call ID, and the Call ID included in the 183 Session Progress signaling is a valid Call ID.

Step 203: The second terminal sends PRACK signaling to the first terminal.

The PRACK signaling may include information about the second handshake in the three handshakes. The PRACK signaling may indicate that the second terminal has received the 183 Session Progress signaling sent by the first terminal.

For a process in which the second terminal sends the PRACK signaling to the first terminal, refer to a process in which the second terminal sends the first INVITE signaling to the first terminal in step 201. For brevity, a detailed sending process of the PRACK signaling is not described herein again.

Optionally, the PRACK signaling includes one or more of the following items: Cseq, a Message ID, Response Code, and a Call ID.

A signaling type or a signaling range targeted by a Cseq number in this embodiment of this application is not specifically limited. In a same session, Cseq may be numbered in sequence. For example, Cseq of the first INVITE signaling in step 201 is 1, Cseq of the PRACK signaling in step 203 is 2, and Cseq of the UPDATE signaling in step 205 is 3, ..., and so on.

For example, Cseq in PRACK signaling is: Cseq 2 PRACK. It indicates herein that 1 is added to Cseq 1 of the first INVITE signaling in step 201, to obtain that Cseq of the PRACK is 2.

For example, the Message ID of the PRACK signaling=IMS_SIP_PRACK, and the Response Code=INFORMAL_RESPONSE(0).

A value of the Call ID in the PRACK signaling is consistent with the value of the Call ID included in the 183 Session Progress signaling.

Step 204: The first terminal sends 200 OK (PRACK) signaling to the second terminal.

The first terminal sends the 200 OK (PRACK) signaling to the second terminal in response to the PRACK signaling sent by the second terminal. It should be noted that 200 OK (PRACK) is signaling replied by the first terminal to the second terminal for the PRACK signaling.

In this embodiment of this application, to facilitate description and distinguish between different 200 OK signaling, signaling replied by different 200 OK signaling is marked in parentheses following the 200 OK signaling, to make a distinction. Herein, the 200 OK signaling used to reply to the PRACK signaling is written as 200 OK (PRACK) signaling, but a writing style herein is only an example. For other 200 OK signaling with double parentheses in this application, refer to this explanation.

The 200 OK (PRACK) signaling may indicate that the PRACK signaling has been received.

For a process in which the first terminal sends the 200 OK (PRACK) signaling to the second terminal, refer to a process in which the first terminal sends the 183 Session Progress signaling to the second terminal in step 202. For brevity, a detailed sending process of the 200 OK (PRACK) is not described herein again.

In step 203, a numbering principle of the Cseq number is described. Correspondingly, when responding to signaling, the first terminal may also carry a Cseq number of a to-be-responded signaling. For example, Cseq included in the 200 OK (PRACK) in the step may be Cseq 2 PRACK, to indicate that the 200 OK (PRACK) responds to PRACK whose number is 2.

Step 205: The second terminal sends UPDATE signaling to the first terminal.

The UPDATE signaling in step 205 may indicate that the second terminal has established a voice bearer, that is, the voice bearer is established. A person skilled in the art may understand that the access network device participates in a process of establishing the voice bearer.

Optionally, after the second terminal receives the 200 OK (PRACK) signaling in step 204, the second terminal checks whether the second terminal has established a first voice bearer, that is, establishment of the first voice bearer is completed or the first voice bearer is established. After having received a voice dedicated bearer establishment instruction delivered by a second radio access network device, and completing the establishment of the first voice bearer based on the voice dedicated bearer establishment instruction, the second terminal sends the UPDATE signaling to the first terminal, and the UPDATE signaling includes information indicating that the second terminal has established the first voice bearer.

After step 205, if the first terminal has not completed establishment of a second voice bearer, the first terminal responds to the UPDATE signaling, and returns, to the second terminal, signaling indicating that the establishment of the second voice bearer is not completed. In some embodiments, information indicating that the establishment of the second voice bearer is not completed is carried in 200 OK (UPDATE) signaling (in the subsequent step 206) and sent to the second terminal. After step 205, if the first terminal has completed the establishment of the second voice bearer, the 200 OK (UPDATE) signaling in the subsequent step 206 may carry the information indicating that the establishment of the second voice bearer is completed. For a process in which the second terminal sends the UPDATE signaling to the first terminal, refer to the process in which the second terminal sends the first INVITE signaling to the first terminal in step 201. For brevity, a detailed sending process of the UPDATE signaling is not described herein again.

Step 206: The first terminal sends the 200 OK (UPDATE) signaling to the second terminal.

The 200 OK (UPDATE) signaling may indicate that the UPDATE signaling has been received. For example, in step 206, the 200 OK (UPDATE) signaling may indicate that the first terminal has received the UPDATE signaling sent by the second terminal.

It should be noted that signaling sent in this case is actually 200 OK signaling used to reply to the UPDATE signaling. In this embodiment of this application, to facilitate description and distinguish different 200 OK signaling, signaling replied by 200 OK signaling that is used to reply to different signaling is marked in parentheses following the 200 OK signaling, to make a distinction. Herein, the 200 OK signaling used to reply to the UPDATE signaling is written as 200 OK (UPDATE) signaling, but a writing style herein is only an example. For other 200 OK (UPDATE) signaling in this application, refer to this explanation.

Optionally, after the first terminal receives the UPDATE signaling sent by the second terminal, the first terminal sends 200 OK (UPDATE) signaling to the first S-CSCF. After receiving the 200 OK (UPDATE) signaling, the first S-CSCF sends the 200 OK (UPDATE) signaling received from the first terminal to the CAT-AS. After receiving the 200 OK (UPDATE) signaling, the CAT-AS may send the received 200 OK (UPDATE) signaling to the second S-CSCF. The second S-CSCF sends the 200 OK (UPDATE) signaling to the second terminal.

The UPDATE signaling involved in step 205 and step 206 is used in a process in which the second terminal establishes the voice bearer with the first terminal. The UPDATE signaling may also serve another purpose.

Optionally, before step 207, negotiation may be performed between the CAT-AS and the second terminal to prepare for subsequent playing of the caller ring back tone (which is not shown in the figure). For example, the CAT-AS may send the UPDATE signaling to the second terminal, and then the second terminal replies to the CAT-AS with the 200 OK (UPDATE) signaling. After these signaling interactions, it indicates that the second terminal negotiates with the CAT-AS about preparations for playing the caller ring back tone (for example, a path is established). In this way, after receiving 180 Ringing signaling sent by the first terminal, the second terminal can start to play the caller ring back tone.

Step 207: The first terminal sends the 180 Ringing signaling to the second terminal.

The 180 Ringing signaling may be vibration on ring information. After establishing the voice bearer, the first terminal sends the 180 Ringing signaling to the second terminal.

Before sending the 180 Ringing signaling, the first terminal may enter a vibration on ring state. If the voice bearer between the first terminal and a network side is established, the first terminal enters the vibration on ring state.

Optionally, after the first terminal sends the 180 Ringing signaling, a call status of the first terminal is updated to the vibration on ring state, and the first terminal starts to vibrate on ring. The vibration on ring state is a state in which when there is an incoming call, a user has not answered the call and a called terminal device vibrates on ring to remind the user of the incoming call. A ringtone used when the vibration on ring starts includes vibration, a caller ring back tone, beep, music, a song, recording, or a video that is personalized, or the like. This is not limited herein.

Optionally, step 207 includes: The first terminal sends the 180 Ringing signaling to the first S-CSCF. After the first S-CSCF receives the 180 Ringing signaling, the first S-CSCF sends the 180 Ringing signaling to the CAT-AS. The CAT-AS replies to the second S-CSCF with the 180 Ringing signaling, and carries SDP_A_CAT in the 180 Ringing signaling. SDP_A_CAT is an SDP parameter related to the caller ring back tone, and is used to prepare for subsequently playing a caller ring back tone customized by the first terminal to the second terminal. In other words, SDP_A_CAT is used to notify the second terminal of preparations for playing the caller ring back tone, and that the caller ring back tone is to be played later. After receiving the 180 Ringing signaling that carries SDP_A_CAT and is sent by the CAT-AS, the second S-CSCF sends the 180 Ringing signaling that carries SDP_A_CAT to the second terminal. After the second terminal receives the 180 Ringing signaling that carries SDP_A_CAT, a call status of the second terminal is updated to a ring back tone state, and the second terminal starts to play a ring back tone. The ring back tone state is a state in which when a call succeeds and a called user does not answer the call, a calling terminal plays the ring back tone to remind a user that the called user has not answered the call. Generally, the ring back tone includes vibration, a caller ring back tone, beep, music, a song, recording, or a video that is personalized, or the like. In this embodiment of this application, the ring back tone played by the second terminal includes the caller ring back tone customized by the first terminal.

Unified descriptions are provided herein. For signaling related to letters or words in the embodiments of this application, that letters corresponding to the signaling are in an uppercase or lowercase form in English is not specifically limited in this application, which may be all uppercase, all lowercase, or a combination of uppercase and lowercase letters (for example, the first letter is uppercase and the other letters are lowercase). For example, the 180 Ringing signaling may alternatively be written as 180 ringing signaling, 180 RINGING signaling, or the like.

Step 208: The second terminal sends PRACK signaling to the CAT-AS.

The PRACK signaling indicates that the 180 Ringing signaling has been received. For example, in step 208, the PRACK signaling indicates that the second terminal has received the 180 Ringing signaling from the first terminal.

For example, the PRACK signaling is used to indicate that the caller ring back tone is allowed to be played.

Optionally, step 208 includes: The second terminal sends the PRACK signaling to the second access network device (not shown in FIG. 2A and FIG. 2B); the second access network device sends the PRACK signaling to the second S-CSCF; and the second S-CSCF sends the PRACK signaling to the CAT-AS.

Optionally, in response to receiving the PRACK signaling, the CAT-AS starts to play the caller ring back tone (Start CAT media) after receiving the PRACK signaling. After the CAT-AS starts to play the caller ring back tone, played caller ring back tone data is transferred to the second terminal through the network side, that is, the user of the second terminal may hear the caller ring back tone played by the CAT-AS.

It should be understood that a trigger condition for starting to play the caller ring back tone by the CAT-AS shown herein is step 208. However, this is merely an example description, and this embodiment of this application is not limited thereto. In fact, the CAT-AS may alternatively perform early negotiation or negotiate preparations for playing the caller ring back tone with the second terminal by using other signaling (for example, the UPDATE signaling).

Step 209: The CAT-AS sends 200 OK (PRACK) signaling to the second terminal.

The 200 OK (PRACK) signaling is used to indicate that the PRACK signaling has been received. Optionally, step 209 includes: The CAT-AS sends the 200 OK (PRACK) signaling to the second S-CSCF; and after receiving the 200 OK (PRACK) signaling sent by the CAT-AS, the second S-CSCF sends the 200 OK (PRACK) signaling to the second terminal.

The first terminal receives an answer action of the user. The answer action may be encapsulated as an answer event and transmitted to a system of the first terminal. The answer event is an event triggered when the user answers a call from the second terminal by using some operations. A specific manner in which a user answers an incoming call is not limited in the embodiments of this application, and includes but is not limited to: tapping an answer key on a screen, sliding the screen, pressing another peripheral (for example, a headset) key, touching and holding a fingerprint sensor, controlling answering by using a voice control function, and the like.

In some embodiments, after the first terminal starts to vibrate on ring, the user of the first terminal taps answering on the first terminal to answer the call.

Step 210: The first terminal sends first 200 OK (INVITE) signaling to the CAT-AS.

Optionally, after the user receives the first call, the first terminal sends the first 200 OK (INVITE) signaling to the first S-CSCF in response to the INVITE signaling.

It may be understood that unified description is provided herein, and 200 OK (INVITE) may alternatively be written as 200 OK for INVITE. This is not specifically limited in the embodiments of this application.

The first 200 OK (INVITE) signaling is used to indicate that the first terminal responds to the first INVITE signaling, or the first terminal replies with 200 OK for the first INVITE signaling.

Optionally, after the user of the first terminal taps answering on the first terminal, the first terminal sends the first 200 OK (INVITE) signaling to the first S-CSCF.

It should be noted that in a signaling interaction process between the second terminal and the first terminal, there may be a plurality of pieces of INVITE signaling and 200 OK (INVITE) signaling. For different INVITE signaling, 200 OK (INVITE) replied by a device may be distinguished by different sequence numbers or sequence identifiers.

Optionally, in some embodiments, 200 OK (INVITE) in step 210 includes Cseq: 1 INVITE, indicating that 200 OK (INVITE) is replied for INVITE whose sequence number is 1. Correspondingly, as described above, the first INVITE signaling in step 201 includes a sequence number (sequence, Cseq): 1, indicating that a sequence number corresponding to the first INVITE signaling is 1.

Optionally, the first 200 OK (INVITE) signaling may further include one or more of the following items: a Message ID, Response Code, and a Call ID.

The Message ID is used to indicate a name or a type of a message. For example, a Message ID of the first 200 OK (INVITE) signaling=IMS_SIP_INVITE, that is, the first 200 OK (INVITE) signaling is 200 OK replied for INVITE. In addition, from Cseq: 1 INVITE included in the 200 OK for INVITE signaling, it may be learned that it is for INVITE signaling whose sequence number is 1.

The Response Code is used to indicate a type of message response code, for example, the Response Code of the first 200 OK (INVITE) signaling=OK (200).

The Call ID is used to identify a session established for this call. Generally, a Call ID of a same session is the same.

After receiving the first 200 OK (INVITE) signaling sent by the first terminal, the first S-CSCF may send the 200 OK for INVITE signaling to the CAT-AS.

After receiving the first 200 OK (INVITE) signaling sent by the first S-CSCF, the CAT-AS may stop playing the caller ring back tone, and reply to the first S-CSCF with first ACK signaling.

Step 211: The CAT-AS sends the first ACK signaling to the first terminal.

The first ACK signaling is first acknowledgement information, and the first ACK signaling may indicate that the first 200 OK (INVITE) signaling has been received. Optionally, in step 211, the first ACK signaling may indicate that the CAT-AS receives the first 200 OK (INVITE) signaling sent by the first S-CSCF.

For example, the first ACK signaling includes Cseq: 1 ACK, indicating that the first ACK signaling is replied for INVITE whose sequence number is 1. As described above, the INVITE signaling in step 201 includes Cseq: 1, that is, the first ACK signaling is replied for the first INVITE signaling in step 201.

Optionally, the first ACK signaling further includes one or more of the following items: a Message ID, Response Code, and a Call ID.

The Message ID is used to indicate a name or a type of a message. For example, Message ID=IMS_SIP_ACK indicates that a type of the first ACK signaling is ACK signaling.

The Response Code is used to indicate a type of message response code, for example, the Response Code of the first ACK signaling=INFORMAL_RESPONSE (0), indicating that the first ACK signaling is response signaling.

The Call ID is used to identify a session established for the first call.

Optionally, step 211 includes: The CAT-AS sends the first ACK signaling to the first S-CSCF; the first S-CSCF sends the first ACK signaling to the first access network device (not shown in FIG. 2A and FIG. 2B); and the first access network device sends the first ACK signaling to the first terminal.

Step 212: The CAT-AS sends second INVITE signaling to the first terminal.

For a process in which the CAT-AS sends the second INVITE signaling to the first terminal, refer to a process in which the CAT-AS sends the first ACK signaling to the first terminal in step 211. For brevity, details are not described herein again. For example, after replying to the first S-CSCF with the first ACK signaling, the CAT-AS initiates a reINVITE procedure, that is, sends the second INVITE signaling to the first S-CSCF.

The second INVITE signaling may be a re-request message. The second INVITE signaling may alternatively be written as reINVITE signaling, may alternatively be written in other forms such as INVITE signaling, reinvite signaling, and re-invite signaling, or may be described with reference to a related protocol or the like. This is not specifically limited herein.

Cseq included in the second INVITE signaling is different from Cseq included in the first INVITE signaling in step 201. In addition, the second INVITE signaling herein may include a Tag identifier. The Tag identifier is used to indicate that the second INVITE signaling herein is not INVITE signaling first sent in this call, and the Tag identifier may be located in a field corresponding to information of the called terminal. In other words, compared with the first INVITE signaling in step 201, the second INVITE signaling in step 212 has the added Tag identifier to distinguish from the first INVITE signaling in step 201. The second INVITE signaling and the first INVITE signaling are two pieces of INVITE signaling in a same call.

Step 213: The first terminal sends second 200 OK (INVITE) signaling to the CAT-AS.

The second 200 OK (INVITE) signaling is used to indicate that the first terminal responds to the second INVITE signaling, or the second 200 OK (INVITE) signaling is 200 OK replied by the first terminal for the second INVITE signaling. It may be understood that the second 200 OK (INVITE) signaling may alternatively be written in other forms such as 200 OK (reINVITE) signaling, 200 OK signaling, 200 OK (REINVITE) signaling, and 200 OK for reINVITE, or may refer to a writing style of a related protocol.

As described above at step 210, for different INVITE signaling, INVITE signaling corresponding to 200 OK (INVITE) signaling replied by a device may be distinguished by different sequence numbers or sequence identifiers.

Optionally, in some embodiments, the second 200 OK (INVITE) signaling in step 213 includes Cseq: 4 INVITE, indicating that the second 200 OK (INVITE) signaling is replied for INVITE whose sequence number is 4. Correspondingly, the second INVITE signaling in step 212 includes Cseq: 4, indicating that a sequence number corresponding to the second INVITE signaling is 4.

Optionally, the second 200 OK (INVITE) signaling may further include one or more of the following items: a Message ID, Response Code, and a Call ID.

The Message ID is used to indicate a name or a type of a message, for example, the Message ID of the second 200 OK (INVITE) signaling=IMS_SIP_INVITE, that is, the second 200 OK (INVITE) signaling is 200 OK replied for the second INVITE signaling. In addition, from Cseq: 4 INVITE included in the second 200 OK (INVITE) signaling, it may be learned that it is for INVITE signaling whose sequence number is 4.

The Response Code is used to indicate a type of message response code, for example, the Response Code of the second 200 OK (INVITE) signaling=OK (200). The Call ID is used to identify a session established for this call.

Step 214: The CAT-AS sends UPDATE signaling to the second terminal.

The UPDATE signaling is used by the CAT-AS to end or disable the caller ring back tone in the first call, as a prompt for disabling the caller ring back tone. For example, the UPDATE signaling is used to set a port number corresponding to an audio media to zero, to disable the port. By using the UPDATE signaling sent by the CAT-AS, it may be learned that playback ends. It should be noted that before step 214, the CAT-AS stops playing the caller ring back tone. After the caller ring back tone stops playing, the second terminal also stops playing the caller ring back tone. However, it is still necessary to end a caller ring back tone procedure by using the UPDATE signaling, to set a corresponding port number to zero.

Optionally, step 214 includes: The CAT-AS sends the UPDATE signaling to the second S-CSCF; the second S-CSCF sends the UPDATE signaling to the second access network device; and the second access network device sends the UPDATE signaling to the second terminal.

Step 215: The second terminal sends 200 OK (UPDATE) signaling to the CAT-AS.

The 200 OK (UPDATE) signaling may indicate that the UPDATE signaling is received, or the second terminal replies with 200 OK for the UPDATE signaling.

Optionally, step 215 includes: The second terminal sends the 200 OK (UPDATE) signaling to the second access network device; the second access network device sends the 200 OK (UPDATE) signaling to the second S-CSCF; and the second S-CSCF sends the 200 OK (UPDATE) signaling to the CAT-AS.

Step 216: The CAT-AS sends first 200 OK (INVITE) signaling to the second terminal.

Herein, a purpose of sending the first 200 OK (INVITE) signaling to the second terminal by the CAT-AS is to transfer an answer action of the first terminal to the second terminal.

It should be noted that only after the first terminal replies with the second 200 OK (INVITE) signaling (that is, step 213), the CAT-AS transmits the first 200 OK (INVITE) signaling fed back by the first terminal after the answer action to a calling side (for example, sending the first 200 OK (INVITE) signaling to the second terminal can be implemented through step 216). Then, after receiving the first 200 OK (INVITE) signaling, the second terminal replies to the first terminal with second ACK signaling. The first terminal receives the second ACK signaling, and in this case, the first terminal and the second terminal can transmit voice data to each other, or the user of the first terminal can communicate with the user of the second terminal.

Step 217: The second terminal sends the second ACK signaling to the first terminal.

The second ACK signaling may indicate that the second terminal receives the first 200 OK (INVITE) signaling sent by the first terminal.

For a process in which the second terminal sends the second ACK signaling to the first terminal, refer to the process in which the second terminal sends the first INVITE signaling to the first terminal in step 201. For brevity, a detailed sending process of the second ACK signaling is not described herein again.

The second ACK signaling may be second acknowledgement information. The second ACK signaling is used to indicate that the first 200 OK (INVITE) signaling has been received. Optionally, in step 217, the second ACK signaling is used to indicate that the second terminal has received the first 200 OK (INVITE) signaling sent by the first terminal to the second terminal.

It may be understood that after step 217, a voice packet may be sent between the second terminal and the first terminal, so that the user of the second terminal and the user of the first terminal can normally perform a voice call. The voice packet may be voice data. For example, the second terminal sends voice data to the first terminal. For another example, the first terminal sends voice data to the second terminal.

It may be further understood that there is no sequence or trigger relationship between sending the voice data by the first terminal to the second terminal and sending the voice data by the second terminal to the first terminal, and a sequence of the two may be interchanged. In one call process, voice packets may be exchanged between the first terminal and the second terminal a plurality of times. This is not limited in this embodiment of this application.

It may be further understood that after the call ends, the first terminal or the second terminal may also initiate a session end message, for example, a BYE message. Correspondingly, a peer terminal may send a session end response message, for example, an ACK (BYE) message.

It should be understood that step numbers shown in FIG. 2A and FIG. 2B are merely an example for description, and do not constitute a limitation on the protection scope of the embodiments of this application.

FIG. 2A and FIG. 2B show a procedure after the caller ring back tone service is enabled on the first terminal. If the caller ring back tone service is not enabled on the first terminal, the first terminal may enter a call with the second terminal after answering is tapped and the first ACK signaling is received. In addition, if the caller ring back tone service is not enabled on the first terminal, the procedure of the CAT-AS is not involved in FIG. 2A and FIG. 2B. After the caller ring back tone service is enabled, a procedure related to the second INVITE signaling is added on both a first terminal side and the network side (for example, main signaling procedures that are added at the network side after the caller ring back tone service is subscribed and that are marked in a dashed-line box in FIG. 2B).

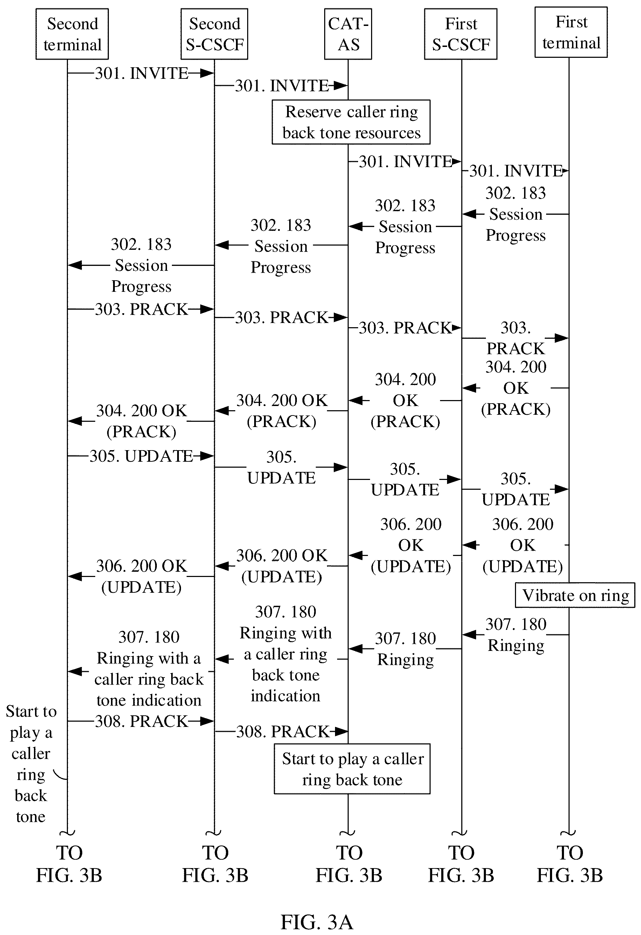

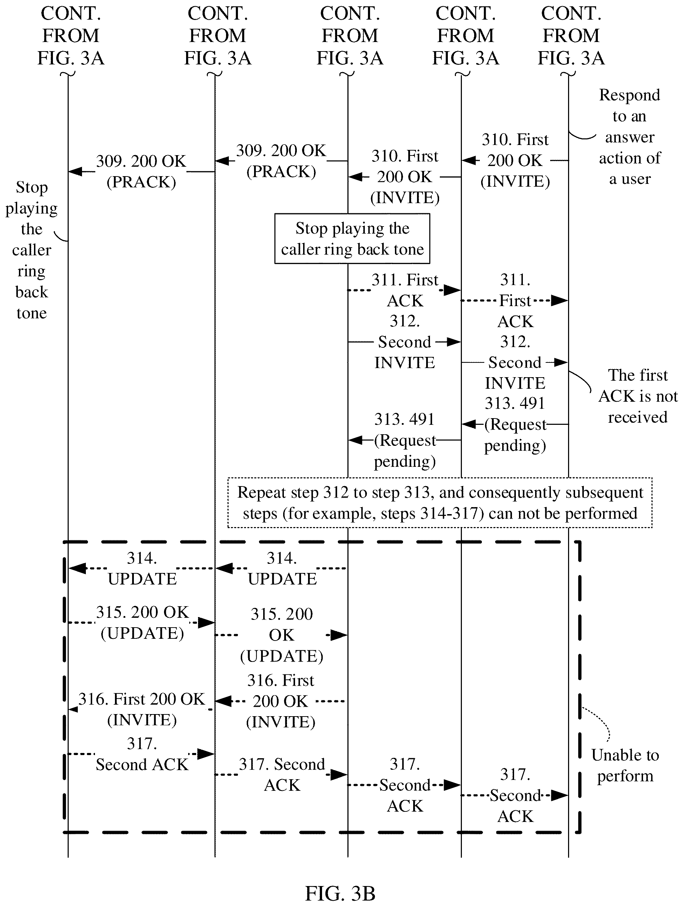

In this case, a user who subscribes to the caller ring back tone is prone to a call problem of no audio, which is mainly manifested as one-way audio or no audio. A reason thereof is as follows: After an action of tapping answering by the user of the first terminal, the first terminal does not receive the first ACK signaling returned by a network (for example, the first S-CSCF), but receives the second INVITE signaling. According to the SIP protocol, if receiving the second INVITE signaling without receiving the first ACK signaling, the first terminal replies to the network with 491. After receiving 491, the network retransmits the second INVITE signaling. However, because the first terminal does not receive the first ACK signaling, the first terminal continues to reply to the network side 491. Consequently, the answer action of the first terminal cannot be transmitted to the second terminal. The user of the first terminal starts to talk after tapping answering, but a sound from the second terminal cannot be transmitted to the first terminal because the second terminal does not receive an answer instruction, resulting in a situation of one-way audio or no audio, which seriously affects user call experience. The following describes the problem scenario with reference to a signaling interaction procedure in FIG. 3A and FIG. 3B.

FIG. 3A and FIG. 3B show a signaling interaction procedure when a first terminal does not receive first ACK signaling. It should be understood that various messages involved in the steps shown in FIG. 2A and FIG. 2B may be existing messages in the SIP protocol, or may be newly defined messages. This is not specifically limited. It should be further understood that some signaling or messages involved in FIG. 3A and FIG. 3B are similar to those in FIG. 2A and FIG. 2B. For details, refer to the explanation in FIG. 2A and FIG. 2B. For same signaling or term, a meaning or an explanation thereof is not described again.

A difference between FIG. 2A and FIG. 2B and FIG. 3A and FIG. 3B lies in that first ACK signaling in step 311 in FIG. 3B is lost, or the first terminal does not receive the first ACK signaling from a network. As shown in FIG. 3A and FIG. 3B, the following steps are included:
step 401 to step 410. For example, step 301 to step 310 in FIG. 3A and FIG. 3B are the same as step 201 to step 210 in FIG. 2A and FIG. 2B. For related descriptions, refer to the foregoing descriptions in FIG. 2A and FIG. 2B. Content of step 301 to step 310 are not described herein again.

In step 311, the first ACK signaling sent by the CAT-AS to the first S-CSCF is not sent normally, and consequently in step 311, the first S-CSCF does not send (or fails to send) the first ACK signaling to the first terminal.

Alternatively, in step 311, the first ACK signaling sent by the CAT-AS to the first S-CSCF is sent normally, but the first ACK signaling sent by the first S-CSCF to the first terminal in step 311 is lost (or the first terminal does not receive the first ACK signaling sent by the first S-CSCF).

Alternatively, in step 311, the first ACK signaling sent by the CAT-AS to the first S-CSCF is normally sent, and the first ACK signaling sent by the first S-CSCF to the first access network device is normally sent, but the first ACK signaling sent by the first access network device to the first terminal is lost (or the first terminal does not receive the first ACK signaling sent by the first access network device).

In any one of the foregoing manners, a final result is that in step 311, the first terminal does not receive the first ACK signaling sent by the network side.

Step 312: The CAT-AS sends second INVITE signaling to the first terminal.

Step 312 is sent when the first terminal does not receive the first ACK signaling. For descriptions of step 312, refer to the foregoing descriptions of step 212 in FIG. 2B. For brevity, details are not described herein again.

For the first terminal, after the user of the first terminal answers, if the first terminal does not receive the first ACK signaling but receives the second INVITE signaling, in this case, the first terminal replies 491 signaling, that is, performs step 313.

Step 313: The first terminal sends the 491 signaling to the CAT-AS without receiving the first ACK signaling.

The 491 signaling may represent a request pending (Request Pending), which is specifically explained as follows: In a same session, a dependent request is being processed (for example, in FIG. 3B, the first 200 OK (INVITE) signaling is being processed). Alternatively, it may be understood that because the first terminal does not receive the first ACK signaling (which is used to respond to the first 200 OK (INVITE) signaling sent at step 310), the first terminal responds to the received second INVITE signaling by replying 491.

It may be understood that if the first terminal does not receive the first ACK signaling, the 491 signaling is replied each time even if the second INVITE signaling is received a plurality of times.

For example, step 313 includes: The first terminal sends the 491 signaling to the first S-CSCF; and after receiving the 491 signaling sent by the first terminal, the first S-CSCF sends the 491 signaling to the CAT-AS. Then, the first S-CSCF retransmits the second INVITE signaling. However, because the first terminal has not received the first ACK signaling, the first terminal continues to reply with the 491 signaling. Consequently, step 312 to step 313 are repeatedly performed, and step 314 to step 317 cannot be performed.

Step 314 to step 317 in FIG. 3B are consistent with step 214 to step 217 in FIG. 2B. For specific descriptions thereof, refer to the descriptions of step 214 to step 217 in FIG. 2B. For brevity, details are not described herein again.

Because step 314 to step 317 cannot be performed, as a result, an answer action of a called side cannot be transmitted to a calling side. In this case, a sound at the calling side is not allowed to be transmitted to the called side, resulting in a situation of one-way audio or uplinkdownlink no audio. Alternatively, the user of the first terminal always cannot hear a voice of the user of the second terminal, and hangs up the phone, affecting call experience. For example, in FIG. 3A and FIG. 3B, the user of the first terminal cannot hear the voice of the user of the second terminal after an action of tapping answering.

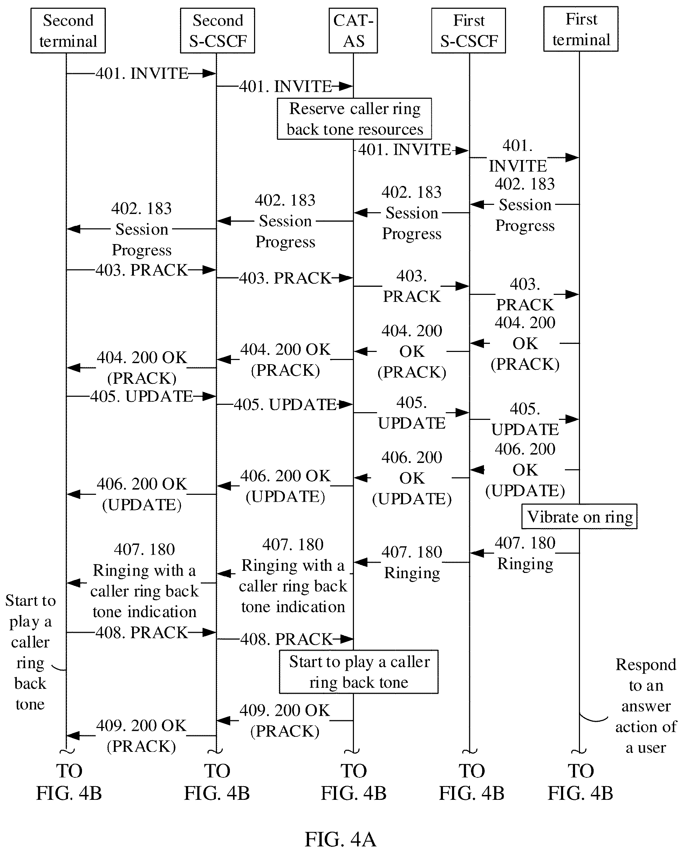

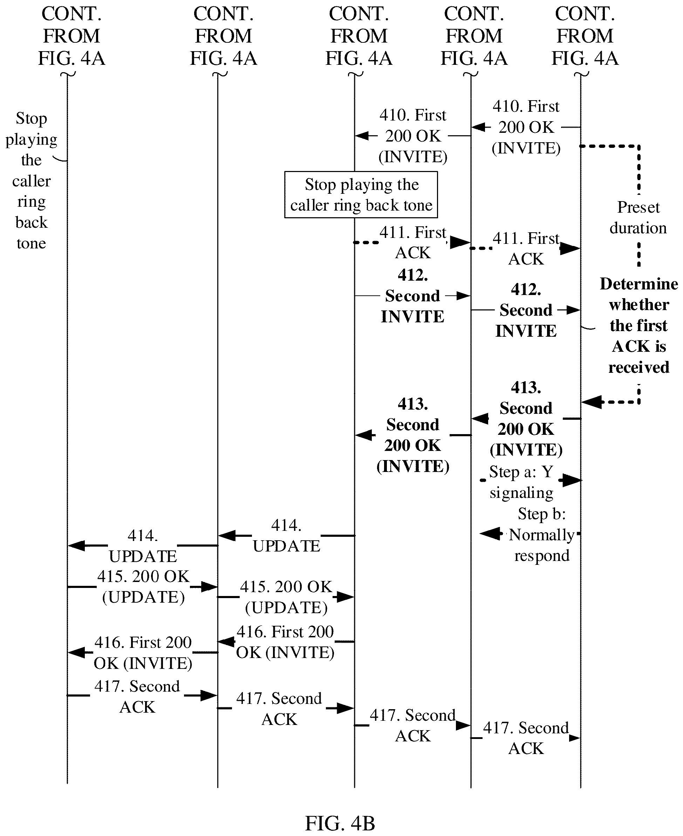

In view of this, an embodiment of this application provides a method for establishing a call connection between a second terminal and a first terminal. After an operation of tapping answering by the user of the first terminal, the first terminal determines whether the second INVITE signaling is received. If the second INVITE signaling is received, the first terminal assumes that the first ACK signaling is replied by the network side, and normally responds with 200 OK signaling for the second INVITE signaling or the second 200 OK (INVITE) signaling, to perform a subsequent process (for example, step 314 to step 317 in FIG. 3B can continue to be performed), so that the first terminal and the second terminal can successfully establish the call connection. The following provides descriptions with reference to a procedure in FIG. 4A and FIG. 4B.

FIG. 4A and FIG. 4B show a signaling interaction procedure when a first terminal does not receive first ACK signaling according to an embodiment of this application. It should be understood that various messages involved in the steps shown in FIG. 4A and FIG. 4B may be existing messages in the SIP protocol, or may be newly defined messages. This is not specifically limited. It should be further understood that some signaling or messages involved in FIG. 4A and FIG. 4B are similar to those in FIG. 2A and FIG. 2B. For details, refer to the explanation in FIG. 2A and FIG. 2B. For same signaling, a meaning or an explanation thereof is not described again. It should be further understood that the procedure shown in FIG. 4A and FIG. 4B may be applied to the scenario shown in FIG. 1. For example, a first S-CSCF shown in FIG. 4A may be an example of the core network device in the first network side device in FIG. 1; a second S-CSCF shown in FIG. 4A may be an example of the core network device in the second network side device in FIG. 1; a CAT-AS shown in FIG. 4A may be an example of the caller ring back tone server in FIG. 1; a second terminal in FIG. 4A may be the second terminal in FIG. 1; and the first terminal in FIG. 4A may be the first terminal in FIG. 1.

In some embodiments, when the first terminal does not receive the first ACK signaling after a user of the first terminal taps answering, a difference between FIG. 4A and FIG. 4B and FIG. 3A and FIG. 3B lies in that the first terminal still replies with second 200 OK (INVITE) signaling if receiving second INVITE signaling in step 412. As shown in FIG. 4A and FIG. 4B, the following steps are included:
step 401 to step 410. For example, step 401 to step 410 in FIG. 4A and FIG. 4B are the same as step 201 to step 210 in FIG. 2A and FIG. 2B. For related descriptions, refer to the foregoing descriptions in FIG. 2A and FIG. 2B. Content of step 401 to step 410 are not described herein again.

For descriptions of step 411, refer to the descriptions of step 311 in FIG. 3B. For brevity, details are not described herein again.

Step 412: The CAT-AS sends the second INVITE signaling to the first terminal.

In this embodiment of this application, if the first terminal does not receive the first ACK signaling but receives the second INVITE signaling, in this case, the first terminal has received the first ACK signaling by default, and therefore directly processes the second INVITE signaling after receiving the second NVITE signaling, for example, replies to the first S-CSCF with the second 200 OK (INVITE) signaling, that is, performs step 413.

Step 413: The first terminal sends the second 200 OK (INVITE) signaling to the CAT-AS.

It may be understood that an occasion at which the first S-CSCF sends the second INVITE signaling to the first terminal is uncertain. It is possible that the second INVITE signaling is immediately sent to the first terminal after the second INVITE signaling sent by the CAT-AS is received, or sending may be delayed for some reasons. To avoid that the first terminal always waits for the first S-CSCF to send the second INVITE signaling, optionally, preset duration may be set at a first terminal side to constrain time of waiting for the second INVITE signaling by the first terminal, or effective time of this embodiment of this application.

Specific duration of the preset duration is not limited in this embodiment of this application. The preset duration may be proper duration flexibly set based on a priori value or an actual requirement. Optionally, in some embodiments, the first terminal receives the second INVITE signaling within the preset duration, and after receiving the second INVITE signaling, determines whether the first ACK signaling is received. If the first ACK signaling is not received, the first terminal sends second 200 OK signaling.

It should be noted that after receiving the second INVITE signaling, the step that the first terminal determines whether the first ACK signaling is received shown in FIG. 4B is implemented within the preset duration. However, this embodiment of this application is not limited thereto. For example, the step that the first terminal determines whether the first ACK signaling is received may alternatively occur beyond the preset duration.

It may be understood that the preset duration may be implemented in a manner of a timer, a stopwatch, or the like in an actual process.

Optionally, in some embodiments, after the first terminal receives the answer action of the user or sends the first 200 OK (INVITE) signaling, a first timer starts timing (or the first timer starts). When receiving the second INVITE signaling, the first terminal determines whether the first timer expires, and determines whether the first ACK signaling is received. If the first timer does not expire (it indicates that the second INVITE signaling is received during running of the first timer) and the first ACK signaling is not received, the first terminal sends the replied second 200 OK (INVITE) signaling to the first S-CSCF, that is, performs step 413. That the first timer does not expire means that timing duration of the first timer is less than or equal to the preset duration.

Certainly, after the first timer expires, if the first terminal does not receive the first ACK signaling and does not receive the second INVITE signaling sent by the S-CSCF either, the first terminal performs corresponding execution based on a procedure in a standard protocol. In addition, after the first timer expires, if the first terminal still does not receive the first ACK signaling, but receives the second INVITE signaling sent by the first S-CSCF, because the second INVITE signaling is received after running duration of the first timer expires, the first terminal replies with 491 signaling.

In summary, the first timer is set to constrain duration of waiting for the second INVITE signaling by the first terminal. In addition, timing duration of the first timer is not specifically limited in this embodiment of this application. The timing duration of the first timer may be the foregoing preset duration. For example, duration of the first timer may be set to 3 seconds.

In addition, a specific occasion at which the first terminal starts the first timer is not limited in this embodiment of this application. For example, the first terminal may start the first timer after sending the first 200 OK (INVITE) signaling to the first S-CSCF. For another example, the first terminal may start the first timer after the user taps answering.

In this embodiment of this application, when the first ACK signaling sent by the first S-CSCF is not received, but the second INVITE signaling sent by the first S-CSCF is received, in comparison with sending the 491 signaling to the first S-CSCF by the first terminal in FIG. 3B, the first terminal replies to the first S-CSCF with the second 200 OK (INVITE) signaling after receiving the second INVITE signaling sent by the first S-CSCF, so that a subsequent step can continue to be performed. For example, step 414 to step 417 are performed.

The subsequent step 414 to step 417 are the same as a normal procedure in FIG. 2A and FIG. 2B. For specific descriptions thereof, refer to the descriptions of step 214 to step 217 in FIG. 2B. For brevity, details are not described herein again.

Optionally, in some embodiments, after step 413 or after the first terminal replies to the first S-CSCF with the second 200 OK (INVITE) signaling, if the first terminal receives another signaling, in this case, the first terminal may normally respond to the received another signaling and no longer reply with the 491 signaling. For example, after step 413, the signaling interaction procedure in FIG. 4B further includes:
Step a: The first terminal receives Y signaling. Step b: The first terminal normally responds to the Y signaling.

Specific content of the Y signaling is not specifically limited in this embodiment of this application, and an initiating object of the Y signaling is not specifically limited. For example, the Y signaling may be another INVITE signaling sent by the S-CSCF to the first terminal.

It should be noted that a reason why the first terminal can normally respond to the Y signaling after step 413 lies in that the first terminal has replied to the first S-CSCF with the second 200 OK (INVITE) signaling at step 413, the first terminal infers that the first S-CSCF has sent the first ACK signaling, and has received, by default, the first ACK signaling sent by the first S-CSCF, and a case of request pending (Request Pending) does not exist. Therefore, the first terminal does not reply with the 491 signaling, but normally responds to the Y signaling.

It should be understood that the procedures in FIG. 2A and FIG. 2B to FIG. 4A and FIG. 4B are described by using some procedures in the session initiation protocol SIP as an example. In fact, a process of establishing the call connection between the second terminal and the first terminal may include more procedures.

It should be further understood that the messages or signaling involved in FIG. 2A and FIG. 2B to FIG. 4A and FIG. 4B may be messages or signaling in the SIP. For related specific explanations, refer to descriptions in the SIP. The foregoing message descriptions are merely simple descriptions.

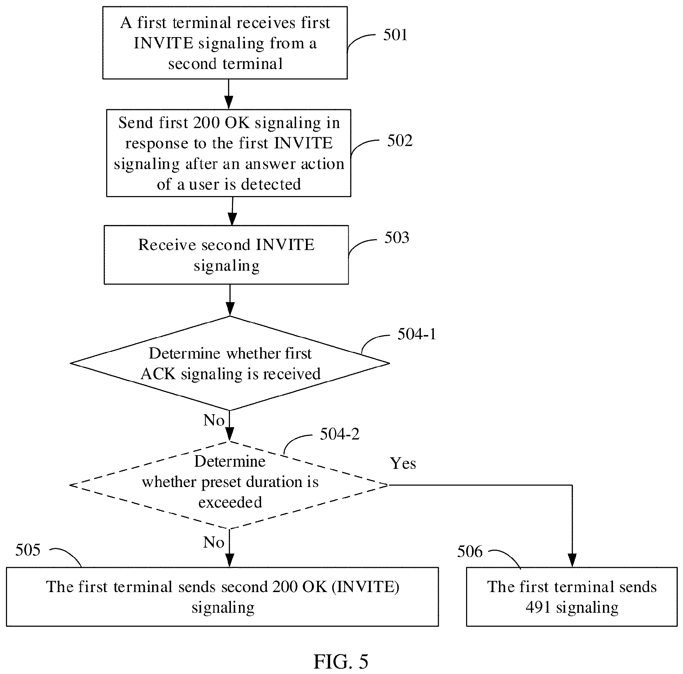

For ease of understanding implementation logic of this embodiment of this application from the first terminal side, the following describes the implementation logic with reference to FIG. 5. FIG. 5 shows a method procedure performed by a first terminal. It should be understood that a first terminal shown in FIG. 5 may be the first terminal in FIG. 4A. It should be further understood that for related terms or explanations involved in FIG. 5, refer to the foregoing descriptions in FIG. 4A and FIG. 4B. For brevity, details are not described herein again. As shown in FIG. 5, the following steps are included:
Step 501: When a second terminal initiates a first call to the first terminal, the first terminal receives first INVITE signaling from the second terminal.

For related explanations of step 501, refer to the foregoing descriptions of step 201 in FIG. 2A. In some embodiments, step 501 may be step 401 in FIG. 4A.

Step 502: After detecting an answer action of a user, the first terminal sends first 200 OK (INVITE) signaling in response to the first INVITE signaling.

Optionally, the first terminal sends the first 200 OK (INVITE) signaling to an S-CSCF. In some embodiments, step 502 may be step 410 in FIG. 4A or step 210 in FIG. 2B. For explanations of the first 200 OK (INVITE) signaling, refer to the foregoing explanations at step 210. For brevity, details are not described herein again.

Step 503: The first terminal receives second INVITE signaling.

For example, based on the first call, the first terminal receives the second INVITE signaling, the second INVITE signaling includes a first identifier, and the INVITE signaling does not include the first identifier. The first identifier may be a Tag identifier mentioned above. For brevity, meanings thereof are not described herein again.

If receiving the second INVITE signaling, the first terminal performs step 504-1.

As described above, optionally, in some embodiments, the first terminal may enable a first timer to detect whether first ACK signaling is received. For related descriptions, refer to the foregoing descriptions. Details are not described herein again.

Step 504-1: After receiving the second INVITE signaling, the first terminal determines whether the first ACK signaling is received.

Optionally, in some embodiments, the following may be further included in FIG. 5: Step 504-2: When the first ACK signaling is not received, it may be further determined whether (duration from a moment after the first 200 OK signaling is sent to a current moment, or duration from a moment after the answer action of the user is detected to the current moment) exceeds preset duration.

A specific implementation in step 504-2 is not specifically limited in this embodiment of this application. For example, a magnitude relationship between timing duration of the first timer and the preset duration may be determined by introducing the first timer, to determine whether the preset duration is exceeded.

For example, if a determining result of step 504-2 is "yes", step 506 is performed; or if a determining result of step 504-2 is "no", step 505 is performed.

Step 505: The first terminal sends second 200 OK (INVITE) signaling. In some embodiments, step 505 may be step 413 in FIG. 4B.

Step 506: The first terminal sends 491 signaling. In some embodiments, step 506 may be step 313 in FIG. 3B.

For related descriptions of some terms or signaling involved in FIG. 5, refer to the foregoing descriptions in FIG. 2A and FIG. 2B or FIG. 4A and FIG. 4B.

It should be noted that the interaction diagrams shown in FIG. 2A and FIG. 2B to FIG. 4A and FIG. 4B are merely for ease of understanding, and are not intended to limit the embodiments of this application to the examples shown in the figures. In fact, a person skilled in the art may perform equivalent transformations based on the examples in FIG. 2A and FIG. 2B to FIG. 4A and FIG. 4B to obtain more implementations.

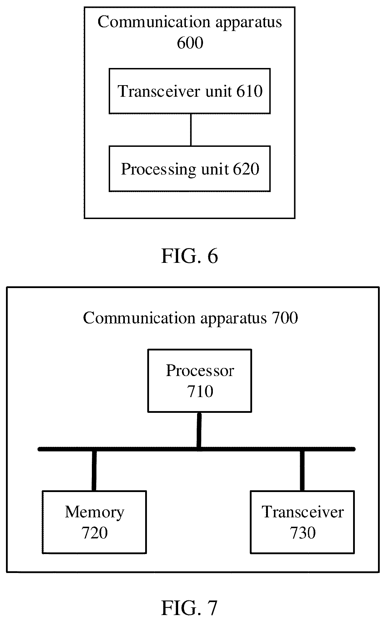

The call connection method provided in the embodiments of this application are described above in detail with reference to FIG. 1 to FIG. 5. Apparatus embodiments of this application are described in detail below with reference to FIG. 6 to FIG. 8. It should be understood that the call connection apparatus in the embodiments of this application may perform various call connection methods in the foregoing embodiments of this application, that is, for specific working processes of the following various products, refer to corresponding processes in the foregoing method embodiments.

FIG. 6 is a schematic block diagram of a call connection apparatus 600 according to an embodiment of this application. It should be understood that the apparatus 600 may perform the method performed by the first terminal in the call connection method shown in FIG. 2A and FIG. 2B to FIG. 5.

As shown in FIG. 6, the apparatus 600 includes a transceiver unit 610 and a processing unit 620.

For example, the apparatus 600 is configured to perform the method performed by the first terminal in FIG. 4A and FIG. 5. The apparatus subscribes to a caller ring back tone business.

In some embodiments, the transceiver unit 610 is configured to: when a second terminal initiates a first call to the first terminal, receive first INVITE signaling from the second terminal.

The transceiver unit 610 is further configured to send first 200 OK signaling in response to the first INVITE signaling after an answer action of a user is detected.

The transceiver unit 610 is further configured to receive second INVITE signaling based on the first call, the second INVITE signaling includes a first identifier, the first INVITE signaling does not include the first identifier, and after sending the first 200 OK signaling, the first terminal does not receive first ACK signaling before receiving the second INVITE signaling.

The transceiver unit 610 is further configured to send second 200 OK signaling in response to the second INVITE signaling.

Optionally, in an embodiment, the processing unit 620 is configured to: after the second INVITE signaling is received, determine whether the first ACK signaling is received; and
when the first ACK signaling is not received, invoke the transceiver unit 610 to send the second 200 OK signaling.

Optionally, in an embodiment, the processing unit 620 is further configured to: determine whether a first timer expires; and
invoke the transceiver unit 610 to send the second 200 OK signaling when the first ACK signaling is not received and the first timer does not expire, where that the first timer does not expire means that timing duration of the first timer is less than or equal to preset duration, and the timing duration of the first timer is duration between a moment at which the answer action of the user is detected and a current moment, or duration between a moment at which the first 200 OK signaling is sent and the current moment.

Optionally, in an embodiment, the processing unit 620 is further configured to invoke the transceiver unit 610 to send 491 signaling when the first ACK signaling is not received and the first timer expires.

Optionally, in an embodiment, the transceiver unit 610 is further configured to: receive second ACK signaling from the second terminal; and after receiving the second ACK signaling, receive voice data from the second terminal, or send the voice data to the second terminal.

Optionally, in an embodiment, the transceiver unit 610 is further configured to send 180 Ringing signaling to the second terminal after receiving the first INVITE signaling.

Optionally, in an embodiment, the transceiver unit 610 is further configured to receive UPDATE signaling from the second terminal; and send third 200 OK signaling in response to the UPDATE signaling.

Optionally, in an embodiment, the first 200 OK signaling is sent after a caller ring back tone starts to play; and the second INVITE signaling is received after the caller ring back tone stops playing.

In a possible example, the transceiver unit 610 may be implemented by a transceiver. The processing unit 620 may be implemented by a processor or a processing unit. It should be understood that the apparatus 600 is embodied in a form of a functional unit. The term "unit" herein may be implemented in a form of software and/or hardware. This is not specifically limited in this embodiment of this application.

For example, the "unit" may be a software program, a hardware circuit, or a combination of a software program and a hardware circuit for implementing the foregoing functions. The hardware circuit may include an application specific integrated circuit (application specific integrated circuit, ASIC), an electronic circuit, a processor (for example, a shared processor, a dedicated processor, or a processor group) and a memory for executing one or more software or firmware programs, an integrated logic circuit, and/or another proper component that can provide the foregoing functions.

FIG. 7 is a schematic block diagram of a communication apparatus according to an embodiment of this application. The communication apparatus embodiments are corresponding to the method embodiments. For similar descriptions, refer to the method embodiments. A communication apparatus 700 shown in FIG. 7 may be configured to support performing some or all steps that are performed by the first terminal and that are corresponding to the embodiments in FIG. 2A and FIG. 2B to FIG. 5. The communication apparatus 700 includes a processor 710, a memory 720, and a transceiver 730. The processor 710, the memory 720, and the transceiver 730 are connected through communication. The memory 720 stores instructions. The processor 710 is configured to execute the instructions stored in the memory 720. The transceiver 730 is configured to perform specific signal transmitting and receiving driven by the processor 710.

In an implementation, the communication apparatus 700 may be corresponding to the first terminal in the foregoing method embodiments, and may be configured to perform steps and/or procedures performed by the first terminal in the foregoing method embodiments. The processor 710 may be configured to execute the instructions stored in the memory 720, and when the processor 710 executes the instructions stored in the memory, the processor 710 is configured to perform the steps and/or the procedures corresponding to the first terminal in the foregoing method embodiments.

The processor 710 is configured to: when a second terminal initiates a first call to the first terminal, invoke the transceiver 730 to receive first INVITE signaling from the second terminal; after an answer action of a user is detected, in response to the first INVITE signaling, invoke the transceiver 730 to send first 200 OK signaling; based on the first call, invoke the transceiver 730 to receive second INVITE signaling, where the second INVITE signaling includes a first identifier, the first INVITE signaling does not include the first identifier, and after sending the first 200 OK signaling, the first terminal does not receive first ACK signaling before receiving the second INVITE signaling; and in response to the second INVITE signaling, invoke the transceiver 730 to send second 200 OK signaling.

Components in the communication apparatus 700 are connected to each other through communication. To be specific, the processor 710, the memory 720, and the transceiver 730 communicate with each other through an internal connection path to transmit control and/or data signals. The foregoing method embodiments of this application may be applied to a processor, or a processor implements the steps in the method embodiments. The processor may be an integrated circuit chip having a capability of processing a signal. In an implementation process, the steps in the foregoing method embodiments may be completed by a hardware-integrated logic circuit in the processor or instructions in a form of software. The processor may be a central processing unit (central processing unit, CPU), a network processor (network processor, NP) or a combination of a CPU and an NP, a digital signal processor (digital signal processor, DSP), an application specific integrated circuit (application specific integrated circuit, ASIC), a field programmable gate array (field programmable gate array, FPGA), or another programmable logic device, a discrete gate, a transistor logic device, or a discrete hardware component. The methods, steps, and logical block diagrams disclosed in this application may be implemented or performed. A general-purpose processor may be a microprocessor, or the processor may be any conventional processor or the like. The steps of the method disclosed with reference to this application may be directly performed by a hardware decoding processor, or performed by a combination of hardware in a decoding processor and a software module. The software module may be located in a storage medium that is mature in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

The transceiver 730 may include a transmitter and a receiver. The transceiver 730 may further include an antenna, and there may be one or more antennas. The processor 710 and the memory 720 may be devices integrated with the transceiver 730 on different chips. For example, the processor 710 and the memory 720 may be integrated into a baseband chip, and the transceiver 730 may be integrated into a radio frequency chip. The processor 710 and the memory 720 may alternatively be devices integrated with the transceiver 730 on a same chip. This is not limited in this application.

The transceiver 730 may alternatively be a communication interface, for example, an input/output interface. The transceiver 730, the processor 710, and the memory 720 may all be integrated into a same chip, for example, integrated into a baseband chip.

For example, in this embodiment of this application, the processor 710 may be implemented by a processing unit (for example, the processing unit 620 in FIG. 6), the memory 720 may be implemented by a storage module, and the transceiver 730 may be implemented by a transceiver unit (for example, the transceiver unit 610 in FIG. 6).

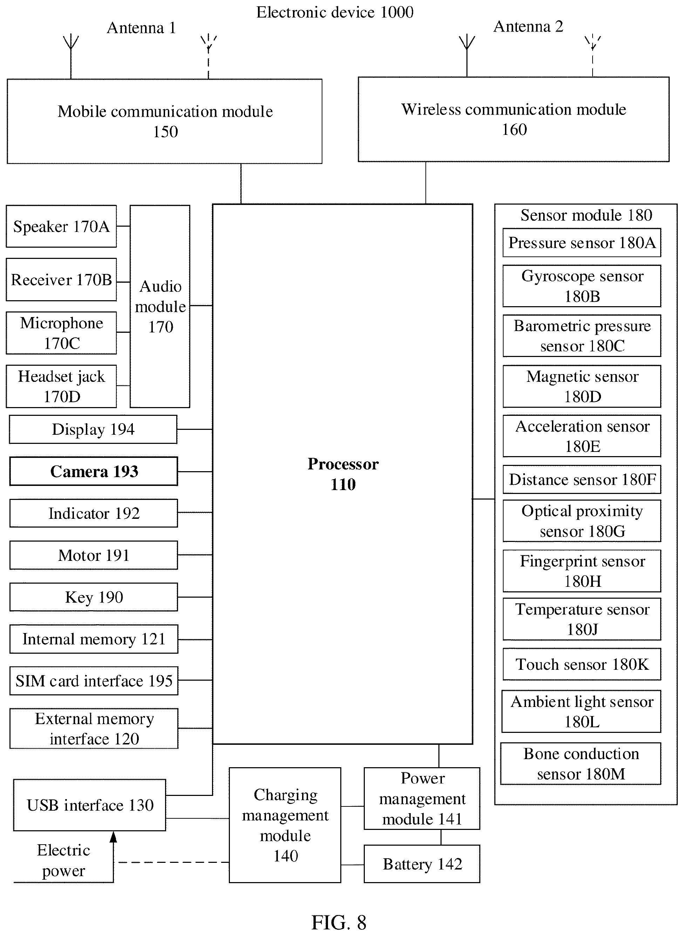

The call connection method provided in the embodiments of this application may adapt to electronic devices that can support calls such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, and a smartwatch. The UE mentioned above may also belong to the electronic devices. The following describes a hardware structure of the first terminal by using an example with reference to FIG. 8.

FIG. 8 is a schematic diagram of a structure of an electronic device 1000 applicable to this application.

The electronic device 1000 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that, the structure shown in FIG. 8 does not constitute a specific limitation on the electronic device 1000. In some other embodiments of this application, the electronic device 1000 may include more or fewer components than those shown in FIG. 8, or the electronic device 1000 may include a combination of some of the components shown in FIG. 8, or the electronic device 1000 may include sub-components of some of the components shown in FIG. 8. The components shown in FIG. 8 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent devices, or may be an integrated device.

The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB interface.

In some embodiments, when a second terminal initiates a first call to the electronic device 1000, the processor 110 is configured to: invoke the communication module to receive first INVITE signaling from the second terminal; after an answer action of a user is detected, send first 200 OK signaling in response to the first INVITE signaling; receive second INVITE signaling based on the first call, where the second INVITE signaling includes a first identifier, the first INVITE signaling does not include the first identifier, and after sending the first 200 OK signaling, a first terminal does not receive first ACK signaling before receiving the second INVITE signaling; and send second 200 OK signaling in response to the second INVITE signaling.

A connection relationship between the modules shown in FIG. 8 is an example for description and does not constitute a limitation on the connection relationship between the modules of the electronic device 1000. Optionally, the modules of the electronic device 1000 may alternatively use a combination of a plurality of connection manners in the foregoing embodiments.

A wireless communication function of the electronic device 1000 may be implemented by using components such as the antenna 1, the antenna 2, the mobile communication module 150, the wireless communication module 160, the modem processor, and the baseband processor.

The electronic device 1000 may implement a display function by using the GPU, the display 194, and the application processor. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 may be configured to display an image or a video. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the electronic device 1000 may include one or N displays 194, where N is a positive integer greater than 1.

The electronic device 1000 may implement a photographing function by using the ISP, the camera 193, the video codec, the GPU, the display 194, the application processor, and the like.

The digital signal processor is configured to process a digital signal, and may further process another digital signal in addition to a digital image signal. For example, when the electronic device 1000 selects a frequency, the digital signal processor is configured to perform Fourier transform and the like on frequency energy.

The ISP is configured to process data fed back by the camera 193. For example, during photographing, a shutter is pressed, and light is transmitted to a camera photosensitive element through a lens. An optical signal is converted into an electrical signal. The camera photosensitive element transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a photographing scene. In some embodiments, the ISP may be disposed in the camera 193.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a wireless communication solution applied to the electronic device, including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

In some embodiments, the electronic device initiates or receives a call request by using the mobile communication module 150 and the antenna 1.

The wireless communication module 160 may provide a solution for wireless communication that is applied to the electronic device and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

Optionally, in an implementation, the audio module 170 may include the speaker 170A, the receiver 170B, the microphone 170C, and the headset jack 170D. The sensor module 180 may include the touch sensor 180K, and may further include at least one of the pressure sensor 180A, the gyroscope sensor 180B, the barometric pressure sensor 180C, the magnetic sensor 180D, the acceleration sensor 180E, the distance sensor 180F, the optical proximity sensor 180G, the fingerprint sensor 180H, the temperature sensor 180J, the ambient light sensor 180L, and the bone conduction sensor 180M.

The electronic device 1000 may implement an audio function by using the audio module 170, the speaker 170A, the receiver 170B, the microphone 170C, the headset jack 170D, the application processor, and the like. For example, music playing and recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 1000 may be used to listen to music or answer a hands-free call by using the speaker 170A.

The receiver 170B, also referred to as an "earpiece", is configured to convert an audio electrical signal into a sound signal. When a call is answered or a voice message is listened to by using the electronic device 1000, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 1000. In some other embodiments, the electronic device 1000 may be provided with two microphones 170C, and may further implement a noise reduction function in addition to collecting a sound signal. In some other embodiments, three, four, or more microphones 170C may alternatively be disposed in the electronic device 1000, to collect a sound signal, reduce noise, further identify a sound source, implement a directional recording function, and the like.

The headset jack 170D is configured to be connected to a wired headset. The headset jack 170D may be the USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

It should be noted that the structure illustrated in this embodiment of this application does not constitute a specific limitation on the electronic device 1000. In some other embodiments of this application, the electronic device 1000 may include more or fewer components than those shown in the figure, some components may be combined, some components may be split, or there may be different component arrangements. The components shown in the figure may be implemented by hardware, software, or a combination of software and hardware.

It may be understood that the call connection method in the embodiments of this application may be applied to the electronic device shown in FIG. 8. For specific implementation steps, refer to the descriptions of the foregoing method embodiments. Details are not described herein again.

In addition, an operating system runs on the foregoing components, for example, an iOS operating system, an Android operating system, or a Windows operating system. An application may be installed and run on the operating system.

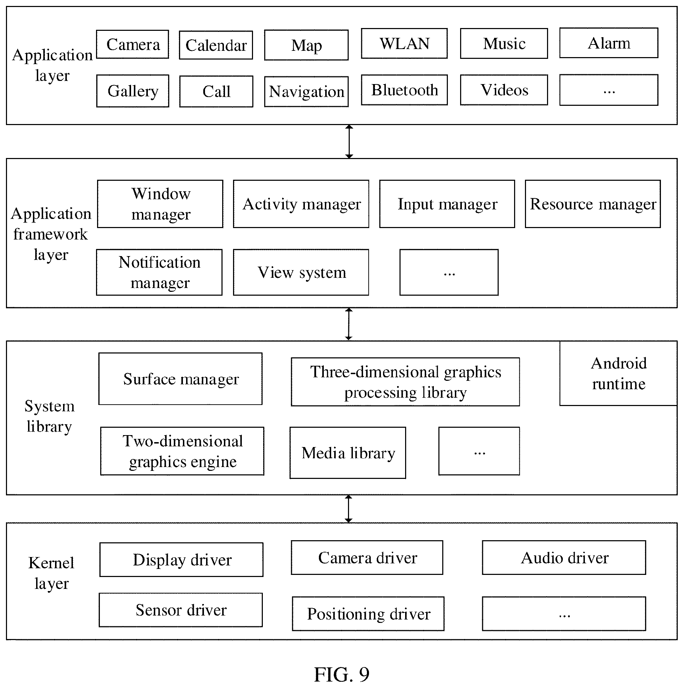

For example, a software architecture of a terminal device is described. The terminal device may be the electronic device 1000 shown in FIG. 8. A software system of the terminal device may use a layered architecture, an event-driven architecture, a microkernel architecture, a micro service architecture, or a cloud architecture. In this embodiment of this application, a software system with the layered architecture is used as an example to describe a software structure of the electronic device 1000. FIG. 9 is a block diagram of a software architecture of a terminal device according to an embodiment of this application. FIG. 9 uses the software architecture of the electronic device 1000 shown in FIG. 8 as an example for description. FIG. 9 is a block diagram of a software structure of an electronic device according to an embodiment of this application.

In a layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages. As shown in FIG. 9, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions. As shown in FIG. 9, the application framework layer may include a window manager, a content provider, a phone manager, a resource manager, a notification manager, a view system, and the like.

The window manager is configured to manage a window program. The window manager may obtain a size of a display, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The view system includes visual controls such as a text display control and a picture display control. The view system may be configured to build an application. A display interface may include one or more views. For example, a display interface including an SMS message notification icon may include a view for displaying a text and a view for displaying a picture.

A kernel library includes two parts: One part is a functional function that needs to be invoked in a java language, and the other part is a kernel library of Android.

The application layer and the application framework layer run on a virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG2, H.262, MP3, AAC, AMR, JPG, and PNG.

The three-dimensional graphics processing library is used to implement three-dimensional graphics drawing, image rendering and composition, layer processing, and the like.

The two-dimensional graphics engine is a drawing engine for 2D drawing.

The kernel layer is a layer between hardware and software. The kernel layer includes at least a display driver, a camera driver, an audio driver, a sensor driver, and the like.

It should be noted that although this embodiment of this application is described by using the Android system as an example, the basic principle thereof is also applicable to electronic devices based on operating systems such as iOS and Windows.

According to the method provided in the embodiments of this application, this application further provides a communication system, including the foregoing first terminal, the second terminal, a called core network device, a calling core network device, and a caller ring back tone server. Optionally, the communication system may further include a calling access network device and a called access network device.

An embodiment of this application provides a chip system. The chip system includes one or more processors, configured to invoke, from a memory, instructions stored in the memory and run the instructions, to enable the foregoing method in the embodiments of this application to be performed. The chip system may include a chip, or may include a chip and another discrete device.

The chip system may include an input circuit or interface configured to send information or data, and an output circuit or interface configured to receive information or data.

This application further provides a computer program product. When the computer program product is executed by a processor, the method in any method embodiment of this application is implemented.

The computer program product may be stored in a memory, and is finally converted, by performing processing processes such as preprocessing, compiling, assembling, and linking, into an executable target file that can be executed by the processor.

This application further provides a computer-readable storage medium. The computer-readable storage medium stores a computer program. When the computer program is executed by a computer, the method in any method embodiment of this application is implemented. The computer program may be an advanced language program, or may be an executable target program.

The computer-readable storage medium may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that, for convenience and brevity of description, for specific working processes and technical effects of the foregoing apparatus and device, refer to corresponding processes and technical effects in the foregoing method embodiments. Details are not described herein again.

In the several embodiments provided in this application, the disclosed system, apparatus, and method may be implemented in another manner. For example, some features of the method embodiments described above may be ignored or not performed. The described apparatus embodiment is merely an example, and unit division is merely logical function division and may be another division in actual implementation. A plurality of units or components may be combined or integrated into another system. In addition, a coupling between units or a coupling between components may be a direct coupling, or may be an indirect coupling. The coupling includes an electrical, mechanical, or another form of connection.

It should be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

In addition, the terms "system" and "network" are usually used interchangeably in this specification. The term "and/or" in this specification is merely an association relationship for describing associated objects, and represents that three relationships may exist. For example, A and/or B may represent the following three cases: Only A exists, both A and B exist, and only B exists. In addition, the character "/" in this specification usually represents an "or" relationship between associated objects.

The terms (or numbers) "first", "second", and the like that appear in the embodiments of this application are merely used for the purpose of description, that is, used to distinguish between different objects, for example, different "signaling", and cannot be understood as an indication or implication of relative importance or an implicit indication of a quantity of indicated technical features. Therefore, a feature defined by "first", "second", or the like can explicitly or implicitly includes one or more features. In the descriptions of the embodiments of this application, "at least one" means one or more; "a plurality of" means two or more; and "at least one of the following" or a similar expression thereof indicates any combination of these items, including a single item or any combination of a plurality of items.

In conclusion, the foregoing descriptions are merely example embodiments of the technical solutions of this application, and are not intended to limit the protection scope of this application. Any modification, equivalent replacement, improvement, and the like made within the spirit and principle of this application shall fall within the protection scope of this application.

## Claims

1. A call connection method, wherein the method is applied to a first terminal, the first terminal subscribes to a caller ring back tone business, and the method comprises:
when a second terminal initiates a first call to the first terminal, receiving first INVITE signaling from the second terminal;
sending first 200 OK signaling in response to the first INVITE signaling after an answer action of a user is detected;
receiving second INVITE signaling based on the first call, wherein the second INVITE signaling comprises a first identifier, the first INVITE signaling does not comprise the first identifier, and after sending the first 200 OK signaling, the first terminal does not receive first ACK signaling before receiving the second INVITE signaling; and
sending second 200 OK signaling in response to the second INVITE signaling.

2. The method according to claim 1, wherein after the second INVITE signaling is received, the method further comprises:
determining whether the first ACK signaling is received; and
the sending second 200 OK signaling comprises:
sending the second 200 OK signaling when the first ACK signaling is not received.

3. The method according to claim 2, wherein the method further comprises:
determining whether a first timer expires; and
the sending second 200 OK signaling comprises:
sending the second 200 OK signaling when the first ACK signaling is not received and the first timer does not expire, wherein that the first timer does not expire means that timing duration of the first timer is less than or equal to preset duration, and the timing duration of the first timer is duration between a moment at which the answer action of the user is detected and a current moment, or duration between a moment at which the first 200 OK signaling is sent and the current moment.

4. The method according to claim 3, wherein the method further comprises:
sending 491 signaling when the first ACK signaling is not received and the first timer expires.

5. The method according to any one of claims 1 to 4, wherein the method further comprises:
receiving second ACK signaling from the second terminal; and
after receiving the second ACK signaling, receiving voice data from the second terminal, or sending voice data to the second terminal.

6. The method according to any one of claims 1 to 5, wherein the method further comprises:
after receiving the first INVITE signaling, sending 180 Ringing signaling to the second terminal.

7. The method according to claim 6, wherein before the 180 Ringing signaling is sent, the method further comprises:
receiving UPDATE signaling from the second terminal; and
sending third 200 OK signaling in response to the UPDATE signaling.

8. The method according to any one of claims 1 to 7, wherein the first 200 OK signaling is sent after a caller ring back tone starts to play; and the second INVITE signaling is received after the caller ring back tone stops playing.

9. An electronic device, comprising a processor and a memory, wherein the processor is coupled to the memory, the memory is configured to store a computer program, and when the computer program is executed by the processor, the electronic device is enabled to perform the method according to any one of claims 1 to 8.

10. A chip, comprising a processor, wherein when the processor executes instructions, the processor performs the method according to any one of claims 1 to 8.

11. A computer-readable storage medium, wherein
the computer-readable storage medium stores a computer-executable program, and when the computer-executable program is invoked by a computer, the computer is enabled to perform the method according to any one of claims 1 to 8.
